# EUROPEAN PATENT APPLICATION

(11) **EP 1 542 141 A1**
(43) Date of publication of application: **15.06.2005**
(21) Application number: 05002278.9
(22) Date of filing: 22.05.2002
(51) Int. Cl.: G06F 17/30

(54) **Drawings data management**

(30) Priority: 13.06.2001 JP 2001178528; 14.06.2001 JP 2001179986; 19.06.2001 JP 2001184664; 20.06.2001 JP 2001187225
(62) Divisional of application: 02728117.9
(71) Applicant: Honda Giken Kogyo Kabushiki Kaisha, Minato-ku, Tokyo 107-8556 (JP)
(72) Inventor: Hirasawa, Ken Honda Giken Kogyo K. K., Tokyo 107-8556 (JP); Ohtsuki, Tatsuo Honda Giken Kogyo K. K., Tokyo 107-8556 (JP); Hoshi, Akemi Honda Giken Kogyo K. K., Tokyo 107-8556 (JP); Ogasawara, Y. Honda Giken Kogyo K. K., Tokyo 107-8556 (JP)
(74) Representative: Rupp, Christian, Dipl.Phys.

(57) **Abstract**

A drawing data management system comprises a drawing database storing drawings and a drawing data management server connected to the drawing database and retrieving from the drawing database the drawing requested by a user. According to one aspect of the invention, the drawing data management server is configured to extract the producer code corresponding to the input part number from an external database storing a table for correspondence between part numbers and producer codes related to the part numbers. The drawing data management server is further configured to obtain conditions for delivering drawings, corresponding to the input part number, from a condition table organized by producer, storing conditions for delivering drawings, set for respective producer codes. Accordingly, the system is able to output the drawing corresponding to the input part number, according to the obtained conditions for delivering drawings.

## Description

### TECHNICAL FIELD

The present invention relates to a computer system for managing electronic data representing drawings.

The present invention relates particularly to a drawing data management system in which limitations on delivery of drawings are set depending on the drawings.

The present invention also relates particularly to a drawing data management system, which is arranged to detect repeated drawings among drawings to be printed and to prevent the repeated drawings from being printed a plurality of times.

The present invention also relates particularly to a drawing data management system, which functions to guarantee quality of a printed drawing and to trace a person in charge of the printed drawing.

The present invention also relates particularly to a drawing data management system, which retrieves any drawing file from a drawing database storing a plurality of drawing files.

### BACKGROUND ART

A variety of product information generated in producing and developing products, includes information on part drawings. Producers typically manage all the part drawings used in their products from the past to the present time, for the purpose of quality control and an improvement of efficiency of respective operations. Accordingly, big businesses with long histories must manage an enormous number of drawings. For example, in automobile producers, a great number of parts are used in a type of automobile and therefore the number of existing drawings corresponds to the number of the parts. Further, periodical model changes increase the number of drawings.

Part drawings of products are used not only in producing the parts, but also frequently in other related departments. For example, a distribution department requires part drawings for specifying package of parts and a quality department requires part drawings for part acceptance inspections and inquiries from the market. Accordingly, producers must manage part drawings in such a way that the whole company can use common drawings. Part drawings used in products from the past to the present time are subjected to the management mentioned above.

Producers typically have a special department for management of drawings in order to manage such an enormous number of drawings. Conventionally, the department for management of drawings has performed management of registered drawings, using recording media such as microfilms and paper sheets. However, recently with development of computers, registered drawings have been represented in electronic data for management. Such a computer system for managing electronic data representing drawings is called a drawing data management system.

In the drawing data management system, drawings for respective parts are represented in electronic data and managed in a unified and a centralized way by a drawing data management server installed in the department for management of drawings. The department for management of drawings receives part drawings for respective parts when mass production starts and the specifications of respective parts are fixed. The department assigns part numbers uniquely identifying kinds of parts, to the part drawings and registers them as drawing files in a drawing database. When an in-house user having an access to the drawing database, wishes to see a drawing, he or she specifies a desired part number at a terminal interconnected with the drawing data management server to see the drawing corresponding to the part number.

Drawings managed by the drawing data management system can be divided into two types from a standpoint of creators. The first type of drawings are those created within the company and treated basically without limitations. The second type of drawings are those created outside the company (that is, those created by a producer in trading partners) and sometimes subjected to various limitations. In this text of specification, drawings created outside the company are called producer drawings.

Producer drawings are treated in different ways according to contents of agreements with the trading partner producers. For example, a trading partner producer imposes no limitation to treatment of drawings from the producer, while another trading partner producer imposes limitation that drawings from the producer should not be delivered to any third party. Further, there exit various conditions for each trading partner producer as below. In some cases, there is no limitation to treatment of assembly drawings, while there are limitations to treatment of part drawings. In other cases, there are limitations in certain geographical areas.

These limitations to delivery of drawings are determined based on agreement with each trading partner producer and vary depending on each agreement. Conventionally, when delivering any drawing, users themselves were required to determine whether or not the drawing is a producer's one and, if affirmative, to check the contents of the agreement with the producer.

If the drawing data management system is able to manage, in a unified way, conditions of each trading partner producer for delivering individual drawings, checking contents of agreement on the individual drawings can be automated. This allows saving users' time and trouble.

For such an automatization, a method has been devised, in which individual conditions for delivering drawings are stored in association with individual drawing files.

However, this method has a problem caused by the number of drawings stored in the drawing database. That is, the number of the drawing files stored in the drawing database is several millions. Linking each of an enormous number of files to conditions for delivering requires an enormous amount of work.

Even if each of an enormous number of files is linked to conditions for delivering, there arises another problem of maintenance of the conditions for delivering. That is, the conditions for delivering to be linked to individual files do not remain unchanged. These conditions for delivering may change due to re-agreement with trading partner producers. Further, trading partner producers may be changed or new trading partner producers will be added. Any change in these conditions for delivering, requires changing the conditions for delivering linked to individual drawings.

Further, in this method, whether or not contents of agreements with individual trading partner producers are reliably complied with, depends on individual conditions for delivering, linked to individual drawings. In other words, individual conditions for delivering must be linked to several millions of drawing files without any input error, in order to ensure compliance with the contents of agreements. However, finding an input error in millions of drawing files is difficult. Accordingly, a system managing conditions for delivering drawings according to the above method, fails to have a high degree of reliability for compliance with the contents of agreements.

Accordingly, a drawing data management system is required, which is easy to maintain and allows users to comply with conditions for delivering individual drawings with a high degree of reliability.

Further, in such a drawing data management system, for one drawing one file is created and stored in a drawing database. However, one drawing file does not necessarily correspond to one part number. In some cases, one drawing file corresponds to a plurality of part numbers.

In more detail, part numbers are basically assigned to all the parts used in a product. However, among the parts there exist parts having the same shape and those having laterally symmetrical shapes. For example, in automobiles, some parts used on the right side are of the same shapes with those used on the left side. In this case, different part numbers are assigned to the parts used on the right side and those used on the left side.

In the drawing data management system, it is not preferable that a plurality of drawing files are create and stored for one and the same drawing (that is, the same image), because of wasted memory capacity. Accordingly, for a plurality of parts having the same shape or laterally symmetrical shapes, there exists one drawing file and plurality of part numbers are made to correspond to the one drawing file.

One of the processes of the drawing data management system, is "reserved delivery of drawings". The reserved delivery of drawings is a process in which a printer connected to a drawing data management server delivers a plurality of drawings at a time, for which a user has entered reservations of the delivery into the drawing data management server.

For example, the reserved delivery of drawings is used when a user must submit a great number of part drawings by one operation to a trading partner producer. The user prepares a list in which a plurality of part numbers corresponding to the drawings to be submitted and submits the list to the drawing data management department. The drawing data management department has the drawings printed at a time by a printer, based on the part number list. The printed drawings are delivered to the department having made the request or the destination of the drawings.

In conventional drawing data management systems, when such a plurality of drawings are printed at a time, a plurality of part numbers are input together and the plurality of part numbers are used as keys to print all the corresponding drawings. In this process, even if the input part numbers is made to correspond to a single drawing file, the drawing data management system prints a number of drawings, corresponding to the number of the input part numbers.

For example, assume that a single drawing file is made to correspond to 15 part numbers. When the 15 part numbers are listed on a part number list, 15 identical drawings are printed. The reason is that the 15 part numbers alone do not show that all the drawing corresponding to the 15 part numbers are identical. This means that 14 unnecessary drawings are printed.

Accordingly, in operations to print a plurality of drawings at a time, such as the reserved delivery of drawings, a drawing data management system automatically detecting identical drawings, based on input drawing numbers, is sought after. Further, a drawing data management system arranged to avoid printing the detected identical drawings a plurality of times, is sought after.

In producers a department typically affixes delivery stamps on its printed drawings to guarantee quality of the drawings and define responsibility for data security when they are submitted to the outside of the department. The delivery stamps include information on date and time of delivery, name of company, name of delivering department and the like. Each department is responsible for printed drawings with its delivery stamps affixed.

However, in conventional drawing data management systems, it cannot be checked whether delivery stamps have been affixed on printed drawings without fail. Accordingly, a delivery stamp replacement function (a function for guaranteeing quality of printed drawings and allowing trace of a person responsible for the drawing) is sought after, in the drawing data management system.

Thus, a drawing data management system with a function of managing delivery information of drawings in place of delivery stamps, is required.

Typically, an identifying code assigned to a drawing is defined in such a way that people can estimate to some extent a type of the part drawing corresponding to the identifying code when they see it.

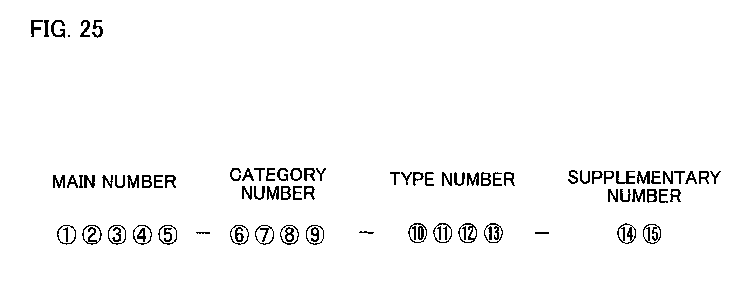

Fig. 25 shows an example of an identifying code. The identifying code consists of 15-digit characters (including numbers) divided into four groups according to part attributes (such as types of parts and models for which parts are used). Upper 5 digits of the 15-digit identifying code represent a main number, while the succeeding 4 digits represent a category number. These main number and category number represent an identifying code of a parent drawing. 4 digits succeeding the main number and category number represent a type number, which represents an identifying code of a child drawing of the parent drawing. 2 digits succeeding the type number represent a supplementary number which are defined when necessary. To each digit, one of 36 characters comprising numbers 0 to 9 and characters of the alphabet A to Z is assigned, according to attributes of the part. Since a unique identifying code is assigned to each part drawing without overlaps, an identifying code uniquely defines a corresponding

As mentioned above, a character is assigned to each digit of an identifying code according to attributes of parts. Accordingly, persons familiar with the way of assignment can estimate a type of drawing to some extent, from the identifying code. However, since the number of identifying codes itself is enormous, it is impossible to fully grasp all the identifying codes. Further, the fact that identifying codes are not assigned to part drawings in sequential order makes grasp of identifying codes more difficult.

For example, when an identifying code is assigned to a new part drawing, unassigned main number, category number, type number and supplemental number are respectively assigned. Accordingly, when ordered in descending numerical order, identifying codes registered in the drawing database are not in consecutive order.

In a concrete example, if an identifying code "17509-S04" is registered in the database, an identifying code "17508-S04" or an identifying code "17509-S03" preceding "17509-S04" by one is not necessarily registered, because identifying codes are not assigned as serial numbers. Thus, a great number of identifying codes assigned not in consecutive order, makes users' retrieval of drawings difficult.

For example, when a user does not know the exact identifying code (that is, the identifying code registered in the database) of the user's wished drawing, he or she will estimate the identifying code based on attributes of the wished drawing. Assume the case that the exact identifying code should be found based on an ambiguous identifying code (that is, an identifying code not sure whether or not it is registered in the database) estimated by the user.

The user will ask the drawing data management server about the ambiguous identifying code and by the response will determine whether the identifying code is present in the database. When the ambiguous identifying code is not present in the database, the drawing data management server returns an error signal. Thus, the user recognizes by the response that the input identifying code is not present. In this case, the user will ask the drawing data management server about a different identifying code (probably similar to that input previously) to see a response. After such trial and error, the user might obtain the exact identifying code. However, the user's trial and error requires enormous efforts.

Accordingly, retrieval means suitable for a great number of identifying codes assigned not in consecutive order, are sought after. A drawing data management system allowing the user to properly retrieve the identifying code registered in the database even when the user does not know the exact identifying code and he or she knows an ambiguous identifying code alone.

Thus, new retrieval means of identifying codes in a drawing data management system for managing drawing files, using identifying codes, are required.

### DISCLOSURE OF INVENTION

In order to solve the problem mentioned above, the drawing data management system according to one aspect of the present invention, is arranged as below. The drawing data management system comprises a drawing database storing drawings related to part numbers and a drawing data management server connected to the drawing database and retrieving from the drawing database the drawing corresponding to a user-input part number. The drawing data management server is configured to extract the producer code corresponding to the input part number from an external database storing a table for correspondence between part numbers and producer codes related to the part numbers. The drawing data management server is further configured to obtain conditions for delivering drawings, corresponding to the input part number, from a condition table organized by producer, storing conditions for delivering drawings, set for respective producer codes. Accordingly, the drawing corresponding to the input part number is output according to the obtained conditions for delivering drawings.

According to the one aspect of the present invention, since correspondence between part numbers and producer codes related to the part numbers is managed in the external database, the drawing data management system is able to obtain the latest information on producer codes from the external database. The drawing data management system is able to obtain conditions for delivering drawings corresponding to the part number by referring to conditions for delivering drawings corresponding to the obtained producer code, so that drawings are output according to the conditions for delivering drawings. Thus, users' time and trouble of checking contents of agreements with trading partner producers may be saved.

The drawing data management system according to the aspect of the present invention obtains latest producer codes from a database placed outside the system. Accordingly, the system is easy to maintain and highly reliable. Further, conditions for delivering drawings are sent to user terminals based on the obtained producer codes, so that the user terminals are able to physically limit printing to have users follow agreements with the users.

According to one embodiment of the aspect of the present invention, the drawing data management system further comprises a printer for printing drawings. The conditions for delivering drawings determine whether drawings should be printed or not and if the conditions for delivering drawings, corresponding to the part number do not permit printing, the printer is prohibited from printing the drawing corresponding to the part number.

According to this embodiment, printing of drawings for which delivery is limited according to agreements with trading partner producers, can be physically prohibited.

According to another embodiment of the aspect of the present invention, the drawing data management system further comprises a display for displaying drawings to a user. When the drawing corresponding to the part number is displayed on the display, a massage is displayed according to the conditions for delivering drawings, corresponding to the part number.

This embodiment allows the user to check, on the display, limitation on delivering drawings according to agreements with trading partner producers.

According to another embodiment of the aspect of the present invention, the condition table organized by producer, stores conditions for delivering drawings, for respective areas and for respective producer codes. The drawing data management server obtains from the condition table organized by producer, the conditions for delivering drawings, for respective areas and for the corresponding producer code, so that the drawing corresponding to the input part number is delivered according to the conditions for delivering drawings, for respective areas.

According to this embodiment, the conditions for delivering drawings, for respective areas, corresponding to the producer code obtained from the part number, can be obtained. Thus, drawings can be output according to the conditions for delivering drawings, for respective areas, defined by agreements with trading partner producers.

According to another embodiment of the aspect of the present invention, the drawing data management server obtains the conditions for delivering drawings, corresponding to the input part number, from a condition table organized by part number storing conditions for delivering drawings for each part number. Thus, the drawing corresponding to the input part number is delivered according to the conditions for delivering drawings, corresponding to the obtained part number.

According to this embodiment, the drawing data management system is able to obtain the conditions for delivering drawings set for respective part numbers, so that the drawings may be output according to the conditions.

In order to solve the problem mentioned above, the drawing data management system according to another aspect of the present invention, is arranged as below. The drawing data management system comprises a drawing database storing drawing files related to part numbers, a drawing data management server and a printer. The drawing data management server is connected to the drawing database and retrieves from the drawing database the drawing files corresponding to user-input part numbers. The printer prints drawings of the retrieved drawing files. The drawing data management server is configured to retrieve the drawing files corresponding to the input part numbers and to detect repeated drawing files from the retrieved drawing files. Thus, in response to the detection of the repeated drawing files, the printer is adapted not to repeatedly print drawings contained in the repeated drawing files.

According to the aspect of the present invention, a repetition of drawing files, corresponding to a part number list including a plurality of part numbers can be automatically detected. Accordingly, the drawings for which repetition is found are not printed repeatedly to prevent unnecessary drawings from being printed.

According to the aspect of the invention, in the process of printing a plurality of drawings at a time, repeated drawings are automatically detected through input part numbers. Further, repeated drawings thus detected are printed only once and therefore the plurality of drawings are delivered with efficiency.

According to one embodiment of the aspect of the present invention, the printer prints a specification of delivery of drawings, indicating whether or not drawings corresponding to the part numbers have been successfully delivered. Further, the detected repetitions are indicated in the specification of delivery of drawings in such a way that the repetitions correspond to part numbers.

According to this embodiment, the repetitions are indicated in the specification of delivery of drawings in such a way that the repetitions correspond to part numbers. Accordingly, the user can check whether or not the requested drawings have been successfully delivered by checking the specification of delivery of drawings.

In order to solve the problem mentioned above, the drawing data management system according to another aspect of the present invention, is arranged as below. The drawing data management system comprises a drawing database, an authentication database, a drawing data management server and a printer for printing drawings. The drawing database stores drawings related to part numbers. The authentication database stores user attribute information including user's name and a department to which the user belongs, in association with user ID. The drawing data management server is connected to the drawing database and the authentication database and retrieves from the drawing database the drawing corresponding to a user-input part number. The drawing data management server authenticates the user using the user ID to permit the user to access the drawing database. In response to a drawing file request by the user having logged in, the drawing data management server retrieves the drawing file requested by the user, from the drawing database. Further, the printer prints the drawings contained in the retrieved drawing file, with the user attribute information stored in the authentication database.

According to the aspect of the present invention, the drawing contained in the retrieved drawing file, is printed with the user attribute information, including a user name and a department to which the user belongs, stored in the authentication database. Thus, it is clarified who is responsible for printed drawings.

The drawing data management system according to the aspect of the present invention, records output history of drawing files accessed by users, so that when and by whom the drawings are delivered, can be tracked. Further, attribute information of users having performed printing is recorded on printed drawings, so that who is responsible for the delivered drawings can be tracked, by checking the output history recorded on the log database against the attribute information of the printed drawings.

According to one embodiment of the aspect of the invention, the system further comprises a log database. Further, in response to the printing of the drawing, the drawing data management server generates printing history including time of the printing of drawings, in association with the user, and stores it in the log database.

According to this embodiment, the user can keep track of drawings previously printed through the printing history stored in the log database and it is clarified who is responsible for printed drawings.

According to another embodiment of the aspect of the invention, the system further comprises a log database and a display for displaying the drawings contained in the retrieved drawing file. In response to the displaying of the drawings, the drawing data management server generates printing history including time of the displaying of drawings in association with the user, and stores it in the log database.

According to this embodiment, the user can keep track of drawings previously displayed through the displaying history stored in the log database.

According to another embodiment of the aspect of the invention, the system further comprises a log database and the data management server generates history of retrieval of the retrieved drawing file, in association with the user and stores it in the log database.

According to this embodiment, the user can keep track of drawing files previously accessed through the history of retrieval stored in the log database.

In order to solve the problem mentioned above, the drawing data management system according to another aspect of the present invention, is arranged as below. The drawing data management system comprises a drawing database storing drawing files and a drawing data management server connected to the drawing database. In response to input of an identifying code uniquely identifying drawing files, the drawing data management server retrieves from the drawing database the drawing file corresponding to the input identifying code. The drawing data management server defines magnitude of identifying codes assigned to the drawing files stored in the drawing database. Then, the drawing data management server has the identifying codes to be stored in an identifying code table. Further, according to a user-input retrieving code, the drawing data management server retrieves from the identifying code table the identifying code smaller than and closest to the retrieving code, based on the magnitude.

According to the aspect of the present invention, the identifying code smaller than and closest to the retrieving code, is retrieved based on the magnitude of the identifying codes. Accordingly, even identifying codes widely varying from characters contained in the retrieving code, can be presented to the user.

According to the aspect of the invention, identifying codes registered based on magnitude previously determined, are presented to the user in response to an input retrieving code. Thus, even when the user does not know the exact identifying code, but an ambiguous identifying code, appropriate identifying codes close to the ambiguous identifying code are presented.

According to one embodiment of the aspect of the present invention, the drawing data management server retrieves a plurality of identifying codes in descending order of magnitude and the number of the retrieved identifying codes is defined by a number specified by the user.

According to this embodiment, the user can specify the number of identifying codes to be retrieved and the retrieved identifying codes are selected in descending order from identifying codes having magnitudes close to the retrieving code.

According to another embodiment of the aspect of the present invention, the identifying code includes main number, category number and type number, the main number and the category number representing the parent drawing. The drawing data management server retrieves identifying codes using the main number and the category number.

According to this embodiment, the registered identifying codes are searched based on the main number and the category number and therefore the identifying code representing the parent drawing can be retrieved.

According to another embodiment of the aspect of the present invention, the identifying codes comprise a combination of 36-kind characters, 0 to 9 and A to Z, and magnitudes of the identifying codes are defined by magnitudes of corresponding characters of hexadecimal notation in EBICDIC code.

According to this embodiment, identifying codes comprise numbers 0 to 9 and characters of the alphabet A to Z and magnitudes of the identifying codes are defined by magnitudes of these characters represented in hexadecimal notation of EBCDIC code.

### BRIEF DESCRIPTION OF DRAWINGS

Fig. 1 is a general view of an implementation of the drawing data management system according to the present invention;
Fig. 2 is a flowchart of the procedure of having a part drawing displayed at the user terminal;
Fig. 3 is a functional block diagram of the drawing data management server and the user terminal, according to one aspect of the present invention;
Fig. 4 is a flowchart of the operation of the security level obtaining section;
Fig. 5 is an example of a construction of a part number;
Fig. 6 is a flowchart of the procedure of determining producer drawings;
Fig. 7 is an example of a condition table organized by producer;
Fig. 8 is an example of a condition table organized by part number;
Fig. 9 is a functional block diagram of the drawing data management server and the user terminal, according to another aspect of the present invention;
Fig. 10 is an implementation of a part number input screen;
Fig. 11 is an implementation of a reservation confirmation screen;
Fig. 12 is an example of the specification of reserved delivery of drawings;
Fig. 13 is a flowchart of the whole process of reserved delivery of drawings;
Fig. 14 is a flowchart of the process of generating a drawing file list;
Fig. 15 is the process of detecting repetition of drawing file names;
Fig. 16 is an example of the drawing file list;
Fig. 17 is a flowchart of the process of printing drawings;
Fig. 18 is a block diagram showing in detail the drawing data management server and the user terminal, according to another aspect of the present invention;
Fig. 19 is a log-in screen of the drawing data management system;
Fig. 20 is an implementation of a part number input screen;
Fig. 21 is an implementation of a retrieval result screen;
Fig. 22 is an example of a drawing printed by the drawing data management system according to the present invention;
Fig. 23 is an example of a drawing printed on split sheets;
Fig. 24 is an example of output history generated by the output history generating section;
Fig. 25 is an example of an identifying code;
Fig. 26 is a functional block diagram of the drawing data management server and the user terminal, provided with ambiguous retrieval function according to another aspect of the present invention;
Fig. 27 is a table of hexadecimal codes corresponding to numbers and characters of the alphabet;
Fig. 28 is an example in which main numbers are converted into hexadecimal notation of EBICIDIC code;
Fig. 29 is a list of identifying codes arranged in descending order;
Fig. 30 is an implementation of a menu screen for selecting a retrieving method;
Fig. 31 is an implementation of an ambiguous retrieval screen;
Fig. 32 shows a part of the identifying code table as an example; and
Fig. 33 is an example of a flowchart of the ambiguous retrieval process.

### BEST MODE FOR CARRYING OUT THE INVENTION

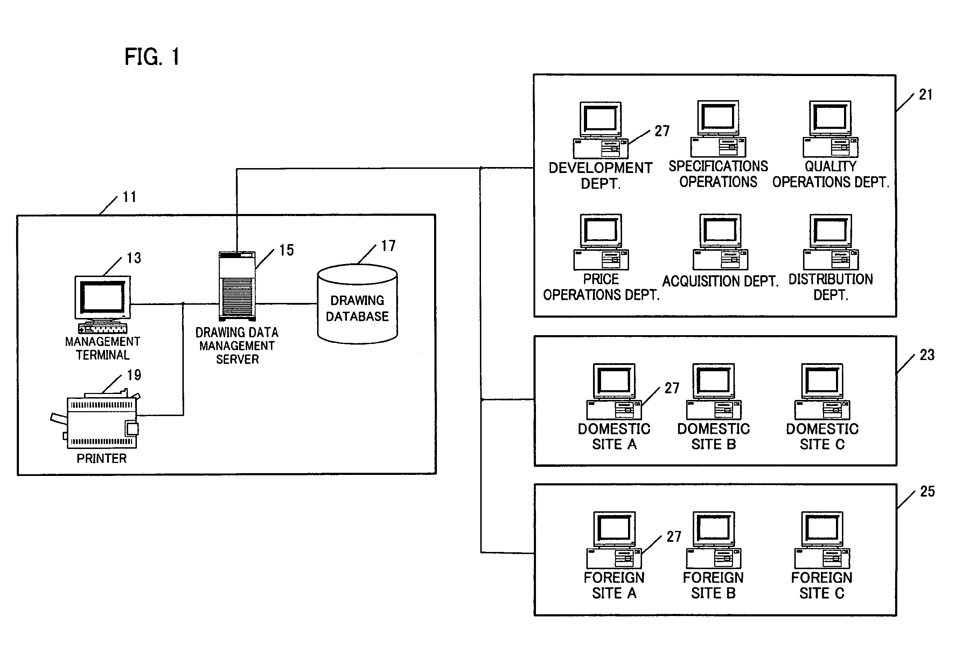

Implementations of the present invention are described below with reference to drawings. Fig. 1 shows an outline of implementation of a drawing data management system of the present invention. In Fig. 1, a drawing data management room 11 in a company is shown. In this example, specifically, the drawing data management room 11 is a room located in the company.

In the drawing data management room 11, a drawing data management server 15 connected to a drawing database 17 is installed. The drawing database 17 stores drawings officially registered in the company (that is, approved drawings to which official numbers are assigned) as electronic drawing files.

For example, drawing files are image files such as TIFF files, BMP files or JPEG files and created by electronically capturing actual drawings on paper sheets using a scanner or the like. In another embodiment, a format for drawing files is not that of an image file and may be a file format based on coordinate data, used in a CAD system or the like.

A person in charge of the management in a drawing data management department, performs maintenance of the drawing data management server 15 and the drawing database 17 via a management terminal 13. For example, when registering a new drawing in the drawing database 17, the person in charge of the management assigns a part number identifying the drawing uniquely and converts the drawing into an image file to be stored in the drawing database 17.

When the person in charge of the management wishes to see any part drawing, he or she is able to get access to the drawing data management server 15 via the management terminal 13 and to search the drawing database 17 using a part number as key to have the drawing corresponding to the part number displayed on a monitor of the management terminal 13. Further, the drawing data management server 15 is connected to a printer or plotter 19 for printing the drawing displayed on the screen.

The drawing data management server 15 installed in the drawing data management room 11 is connected respectively to a plurality of user terminals installed at other locations via any network. Since drawing files stored in the drawing database 17 must be protected against an illegal access, private networks for the company are used for the networks connecting user terminals 27 and the drawing data management server 15.

Fig. 1 shows that user terminals 27 connected to the drawing data management server 15 are divided into groups, based on locations where they are installed. For example, the figure shows user terminals 27 installed at the same site 21, user terminals 27 installed at a remote domestic site 23 and user terminals 27 installed at a foreign site 25, as groups.

User terminals 27 installed at the same site 21 mean those installed in a different room from the drawing data management room 11 in the same building or in the same place of business. User terminals 27 installed at a remote domestic site 23 mean those installed at a place of a related company or a different place of business of the company from the place of the business in which the drawing data management room 11 is present. User terminals 27 installed at a foreign site 25 mean those installed at a place of a related company or a place of business of the company in a different country from the country in which the drawing data management room 11 is present.

User terminals 27 installed at various places are connected to the drawing data management server 15 via a network. The above-mentioned drawing database 17 itself is present in the drawing data management room 11. The registered drawings of the company are managed in a unified way through the drawing database 17. Accordingly, in-house users at respective palaces get access to the drawing database 17 via user terminals 27 to have a drawing file in the drawing database 17, output.

Typically, all the employees are not authorized to see or print registered drawings. In other words, typically, the employees in departments requiring drawings, alone are authorized to see registered drawings, while specific employees in the departments, alone are authorized to print registered drawings.

For this reason, access from user terminals to the drawing data management server 15 is subjected to authentication. After connection with the drawing data management server 15 is established through the authentication, users perform operations such as retrieval, display and printing of drawings.

In order to process such series of operations, application software dedicated for process of outputting drawings is installed in user terminals 27. In this text of specification, the application software installed in user terminals 27 is called "user terminal software".

Besides "user terminal software", software installed in the drawing data management server 15 is called "drawing data management software". The drawing data management software includes functions of retrieval, display and printing of drawings as well as functions of maintaining the whole drawing data management system, such as a process of authenticating each user and a process of managing the drawing database.

The user terminal software installed in user terminals 27 and the drawing data management software installed in the drawing data management server 15 function in cooperation with each other to present various functions via the network.

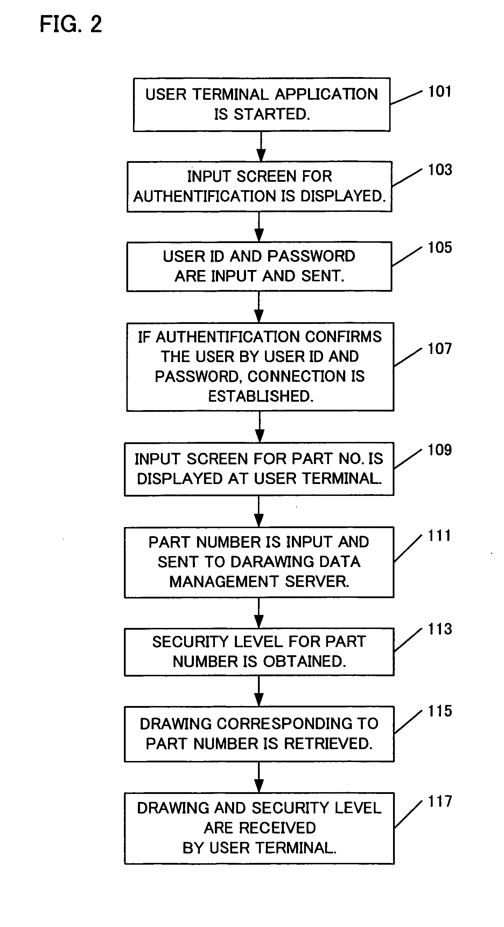

A procedure that in-house users have drawings displayed on user terminals 27 is below described with reference to Fig. 2. Further, security check function of the drawing data management system according to the present invention is described.

Fig. 2 shows a flowchart of a standard procedure by which in-house users have part drawings displayed on user terminals 27.

When a user wishes to see part drawings stored in the drawing database, the user first starts the user terminal application software installed in the user terminal 27 (step 101).

When the user terminal application is started, an input screen for authentication is displayed on a user terminal 27 (step 103). As mentioned above, users having access to the drawing data management server 15 are those specifically authorized by the company. Accordingly, such authorized users are previously registered.

The registered users are given user IDs and passwords for uniquely identifying them. These user IDs and passwords are stored in an authentication database (not shown) in the drawing data management server 15.

Accordingly, a user inputs the user ID and password assigned to him or her, into a user terminal 27 to send them to the drawing data management server 15 (step 105).

The drawing data management server 15 verifies the sent user ID and password against data in the authentication database to perform authentication of the user accessing from the user terminal 27. As a result, if the authentication confirms that the user is authorized, the drawing data management server 15 establishes connection with the user terminal 27 from which the user ID has been sent and keeps the connection until the user logs out (step 107).

When connection between the user terminal 27 and the drawing data management server 15 is established, an input screen for part numbers is displayed at the user terminal 27 in step 109. Then, the user inputs the part number of the drawing that he or her wishes, into the input format on the screen to send the input information to the drawing data management server 15.

When the drawing data management server 15 receives the part number from the user terminal 27, it retrieves the drawing file corresponding to the part number and obtains security level for the drawing corresponding to the part number. Security level is a parameter defining conditions for delivering drawings. The security level determines whether drawings should be printed or not.

The security level in this implementation is described in detail with reference to Table 1. In this implementation, four security levels are provided. Security level 00 indicates in-house drawings (drawings created inside the company). In-house drawings are to be treated without limitations. Security level 01 indicates producer drawings to be printed without limitations, for which warning of careful handling is displayed at the user terminal 27. Security level 02 indicates producer drawings not permitted to be printed. Security level 03 indicates substituted drawings which can be printed. Substituted drawings mean those originally drawn by a trading partner producer and re-drawn by the company according to agreement with the trading partner producer. (in other words, substituted drawings are those re-drawn by the company based on producer drawings.) These substituted drawings can be treated in a similar way as in-house drawings.

**TABLE 1**

| SECURITY LEVEL | CONTENTS OF LIMITATION |
|---|---|
| 00 | IN-HOUSE DRAWING; NO LIMITATION |
| 01 | PRODUCER DRAWING; ALARM ALONE, PERMITTED TO PRINT |
| 02 | PRODUCER DRAWING; NOT PERMITTED TO PRINT |
| 03 | SUBSTITUTED DRAWING; PERMITTED TO PRINT |

In the drawing data management system, security level is obtained for each of individual part number and it is determined based on the security level whether the drawing should be printed or not. As a result, compliance with agreements with trading partner producers is insured.

Although in this implementation only 4 levels are shown on Table 1, the number of security levels may be increased if necessary. Further, conditions for delivering drawings can be set in any way for each of these security levels.

When a security level is obtained for the part number in step 113, the drawing file corresponding to the part number is retrieved from the drawing database in step 115. The retrieved drawing file with the security level previously obtained is sent to the user terminal 27.

Whether the drawing displayed at the user terminal 27 can be printed or not, depends on the security level sent with the drawing to the terminal from the drawing data management server 15. The user terminal application installed in the user terminal 27 determines whether the terminal is permitted to print the drawing or not, based on the security level sent to the terminal. If the terminal is not permitted to print the drawing, the user terminal application displays such indication on the monitor and does not perform printing. As a result, the user can reliably comply with agreements on delivery of drawings with trading partner producers, without the need fort checking contents of the agreements on individual parts.

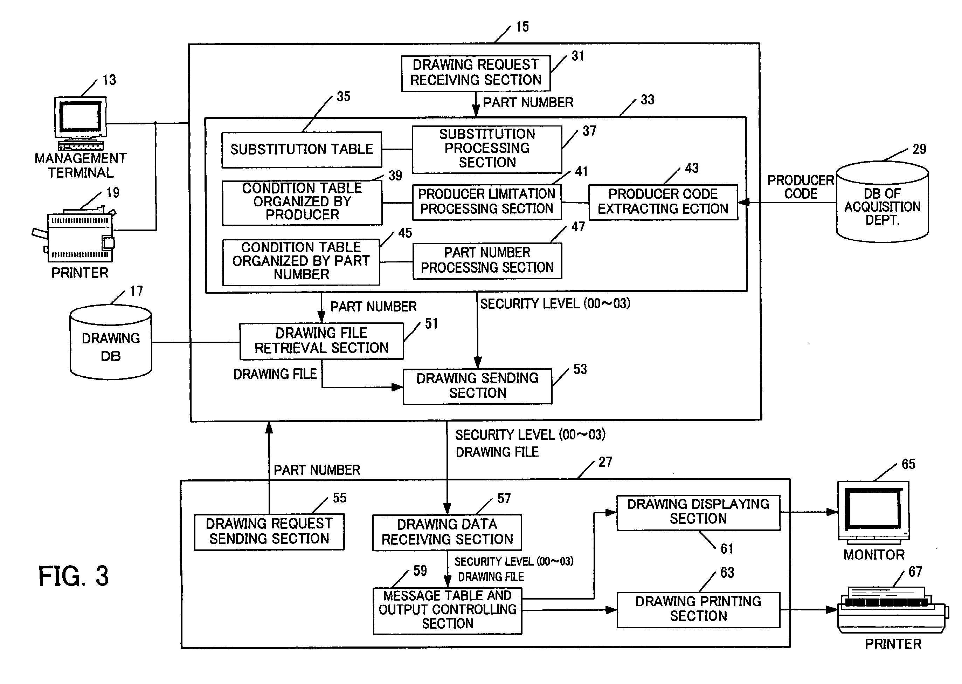

Fig. 3 is a schematic diagram showing the drawing data management server 15 and the user terminal 27 with functional blocks in more detail. Although Fig. 3 does not illustrate functional blocks of log-in process performed by the user terminal 27 and drawing data management server 15, it should be understood that these functions are also included.

The user terminal 27 includes a drawing request sending section 55 for sending a part number input by the user to the drawing data management server 15. The part number sent by the drawing request sending section 55 is received by a drawing request receiving section 31 of the drawing data management server 15. The part number received by the drawing request receiving section 31 is sent to a security level obtaining section 33 where security level corresponding to the part number is obtained.

Security level for each part drawing is obtained from broad categories of parameters; "substituted drawing", "producer" and "part number". Accordingly, the security level obtaining section 33 includes a substitution processing section 37, a producer processing section 41 and a part number processing section 47 for determining these parameters according to the input part number. Further, the security level obtaining section 33 includes a substitution table 35, a condition table organized by producer 39 and a condition table organized by part number 45.

In more detail, the substitution processing section 37 determines whether or not drawings corresponding to the input part number are substituted drawings. The substitution table 35 stores the part numbers linked to substituted drawings in a table format. Accordingly, the substitution processing section 37 determines whether or not a part number matching the input one is present on the substitution table 35. Presence of a part number matching the input one indicates presence of a substituted drawing corresponding to the part number.

When the substitution processing section 37 determines that a substituted drawing corresponding to the part number is present, a drawing number of the substituted drawing is sent to a drawing file retrieval section 51, instead of the part number. Accordingly, the substitution table 35 also stores drawing numbers of substituted drawings corresponding to respective part numbers in a table format.

A producer processing section 41 determines whether the drawing corresponding to the input number is a producer drawing or an in-house drawing. As a result, if the drawing is a producer drawing, the producer processing section 41 obtains information on the producer corresponding to the part number to obtain conditions for delivering drawings, corresponding to the information on the producer.

A part number does not include information on a name of a producer which has supplied the part. Accordingly, in case that a name of a producer corresponding to the part number is required, a database in which parts numbers and names of producers are related, must be consulted. The drawing data management system according to the present invention consults a database outside the drawing data management system, in order to identify a trading partner producer corresponding to the part number.

More specifically, as shown in Fig. 3, a database 29 managed by the part acquisition department in the company is used as the external database. As mentioned above, conditions for delivering part drawings vary according to agreements with trading partner producers and are subjected to aperiodic changes due to re-agreement, change and addition of trading partner producers and the like. The database 29 of the part acquisition department is arranged to manage correspondence between part numbers and producers and is always updated with these changes.

Accordingly, the drawing data management server 15 according to the present invention can reflect the current conditions for delivering drawings by obtaining information on producers from the external database 29. Further, correspondence between part numbers and trading partner producers is maintained not by the drawing data management server 15, but by another server installed in the part acquisition department. As a result, load of the drawing data management department can be reduced.

In the external database 29, producer codes are assigned to individual trading partner producers and a table for correspondence between part numbers and producer codes related to the numbers, is stored. A producer code extracting section 43 of the security level obtaining section 33 obtains producer codes for respective producers corresponding to respective part numbers, from the external database 29.

Conditions for delivering drawings, corresponding to respective producer codes are stored on the condition table organized by producer 39 in a table format. Accordingly, conditions for delivering drawings, corresponding to the input part number, can be determined by referring to conditions for delivering drawings, corresponding to the obtained producer code.

The part processing section 47 determines conditions for delivering drawings, set for each part number. For example, in some cases, delivering an assembly drawing for an assembled part is permitted, while delivering drawings for individual parts constituting the assembled part is not permitted according to an agreement with a trading partner producer. In such cases, the conditions for delivering drawings cannot be determined by the obtained producer code alone. Accordingly, the condition table organized by part number 45 stores conditions for delivering drawings for each part number. The part number section 47 compares the input part number with numbers stored in the condition table organized by part number 45 to obtain conditions for delivering drawings for each part number.

Thus, the security level obtaining section 33 obtains the security level corresponding to the input part number and sends the obtained security level to a drawing sending section 53.

The security level obtaining section 33 sends the part number to the drawing file retrieval section 51. If the substitution processing section 37 determines presence of a substituted drawing corresponding to the part number, the drawing number of the substituted drawing is sent to the drawing file retrieval section 51, instead of the part number.

The drawing file retrieval section 51 retrieves the corresponding drawing file from the drawing database 17 based on the number (the part number or the drawing number of the substituted drawing) and sends the retrieved drawing file to the drawing sending section 53.

The drawing sending section 53 sends the drawing file sent by the drawing file retrieval section 51, with the security level obtained in the security level obtaining section 33, to the user terminal 27 having requested the drawing.

The user terminal 27 receives the drawing file and security level sent by the drawing file management server 15 at a drawing receiving section 57. The drawing file and security level are sent to a message table and an output controlling section 59 for temporary storage there.

At the user terminal 27, a drawing displaying section 61 and a drawing printing section 63 substantially process an operation of outputting drawing files. The drawing displaying section 61 performs a process of displaying the drawing file sent to the terminal, on a monitor 65, while the drawing printing section 63 performs a process of printing drawing through a printer 67.

The message table and output controlling section 59 in the user terminal 27 reads security levels of individual drawing files sent to the terminal and controls output of drawings at the user terminal 27, based on the results of the reading.

For example, in this implementation, there in no limitation to displaying drawings on the monitor 65. Accordingly, any user can see the drawing corresponding to a part number displayed on the monitor, if he or she wishes the drawing to be displayed on the monitor. The message table and output controlling section 59 display on the monitor messages corresponding to security levels for respective drawings, with the drawings displayed on the monitor.

For example, when the security level is 00, the message displayed with the drawing will be blank. When the security level is 01, the message displayed with the drawing will be "Those displayed are producer drawings. Careful handling is required. " When the security level is 02, the message displayed with the drawing will be "Those displayed are producer drawings and not permitted to be printed." When the security level is 03, the message displayed with the drawing will be "Those displayed are substituted drawings. Careful handling is required. "

Thus, the message table and output controlling section 59 reads security levels of respective drawings and displays messages according to the security levels. As a result, the user can check on the monitor 65 how to handle the respective drawings.

When the user tries to print a drawing, a drawing printing section 63 is controlled according to the reading of the message table and output controlling section 59. For example, when the security level of a drawing is 02, the message table and output controlling section 59 functions to prohibit a printing process of the drawing printing section 63. As a result, the user cannot physically have the drawing delivered, so that the agreement with the trading partner producer is complied with.

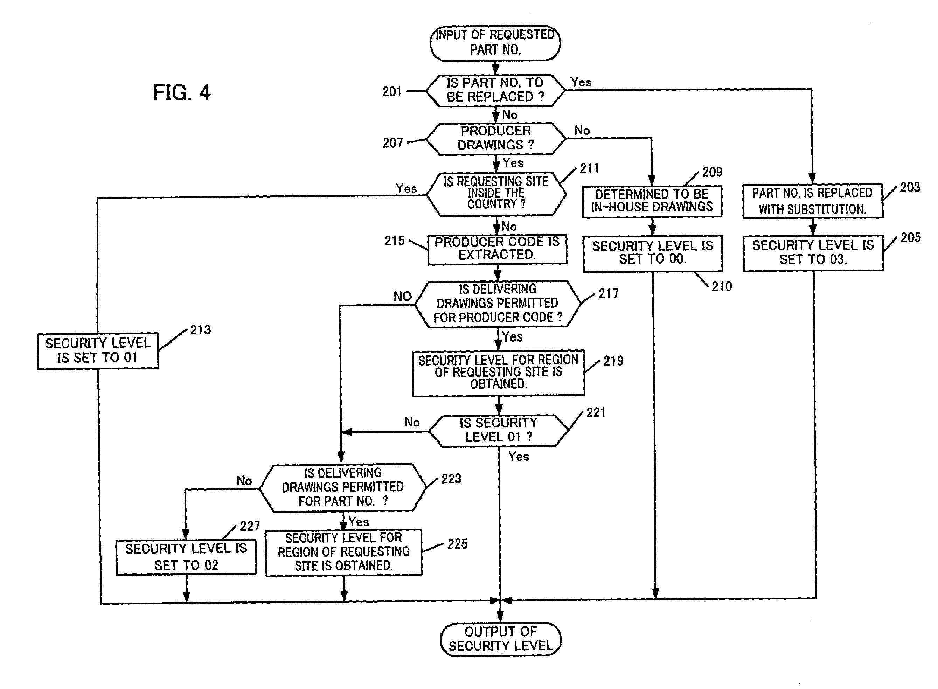

Fig. 4 shows a flowchart of a process of the security level obtaining section 33 of the drawing data management server 15. With this drawing, the process of obtaining security level of the drawing data management system according to the present invention, will be described in more detail.

When the part number of the drawing the user requires is input into the security level obtaining section33, whether the input number is that to be replaced or not is determined in step 201. When it is determined in this step that the input number is that to be replaced, the process proceeds to step 203.

In step 203, the input part number is replaced with the number of the corresponding substituted drawing. The substituted number is sent to the drawing file retrieval section 51 so that the substituted drawing is sent to the terminal 27 of the user having requested the drawings.

In step 205, security level of the drawing is set. For a substituted drawing, the security level of the drawing is set to 03.

When it is determined in step 201 that the input number is not that to be replaced, the process proceeds to step 207, where whether the drawings corresponding to the part number is a producer drawings or not.

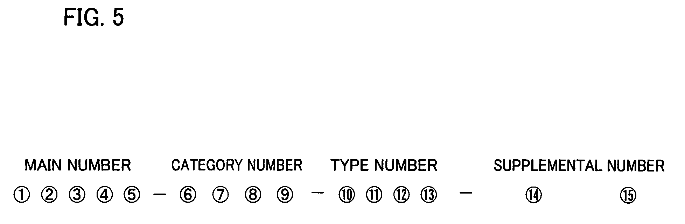

Information on whether the drawing corresponding to the part number is a producer drawing or not, is included in the part number. Fig. 5 shows a construction of part numbers used in this implementation. Part numbers consist of 15 digits of a combination of 4 kinds of numbers (main number, category number, type number and supplemental number). One of numbers (0 to 9) and characters of the alphabet (A to Z) is assigned to each digit.

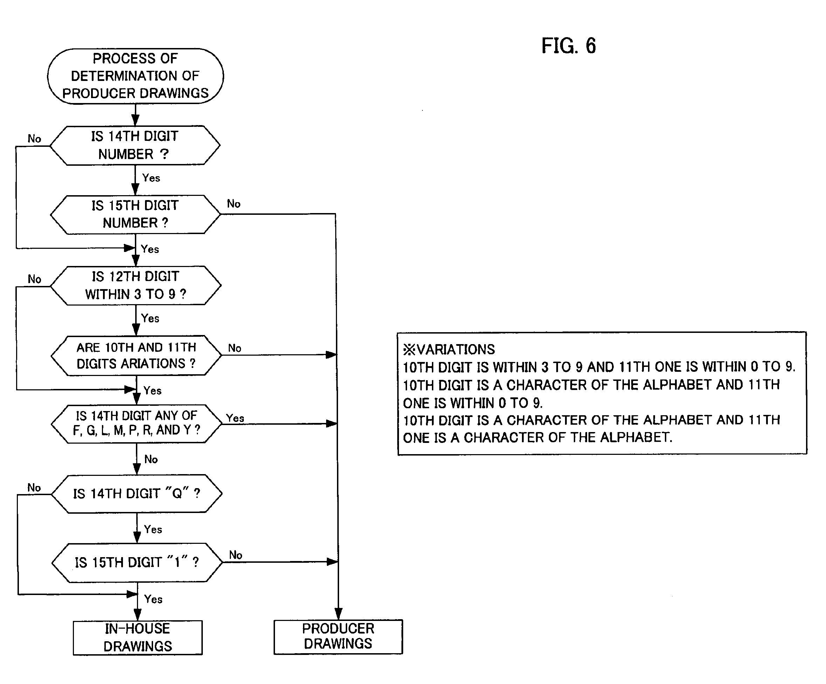

Fig. 6 is a flowchart showing a process in step 207 in more detail. As shown in this flowchart, whether the drawing is a producer one or an in-house one, is determined by checking the 10th to 15th digits within the part number.

With reference to Fig. 4 again, when it is determined in step 207 that the drawing corresponding to the part number is not a producer drawing, the process proceeds to step 209 where it is determined that the drawing is an in-house one. For an in-house drawing, the security level of the drawing is set to 00.

When it is determined in step 207 that the drawing corresponding to the part number is a producer drawing, the process proceeds to step 211, where it is determined whether the site having requested the drawing (that is, the site where the user terminal 27 is installed) is inside or outside the country. In some cases, under agreement drawings should be handled outside the country in a different way as inside the country. Accordingly, the above determination process is performed to set the security level according to the site having requested the drawing. The site having requested the drawing can be determined with reference to the user ID of the accessing user.

In the drawing data management system of this implementation, printing any drawing is permitted at the user terminal 27 if the site having requested the drawing is inside the country. Accordingly, when it is determined that the site having requested the drawing is inside the country, the security level for the drawing corresponding to the part number is set to "01" (step 213).

When it is determined in step 211 that the site having requested the drawings is outside the country, the process proceeds to step 215, where a producer code is obtained to set security level for the drawings corresponding to the part number. These processes allow the drawing data management system to set security levels to respective drawings according to agreements with respective trading partner producers.

In step 215, as mentioned above, the producer code corresponding to the input part number is extracted from the external database 29. Then, in step 217, it is determined whether delivering drawings is permitted or not for the extracted producer code with reference to the condition table organized by producer 39.

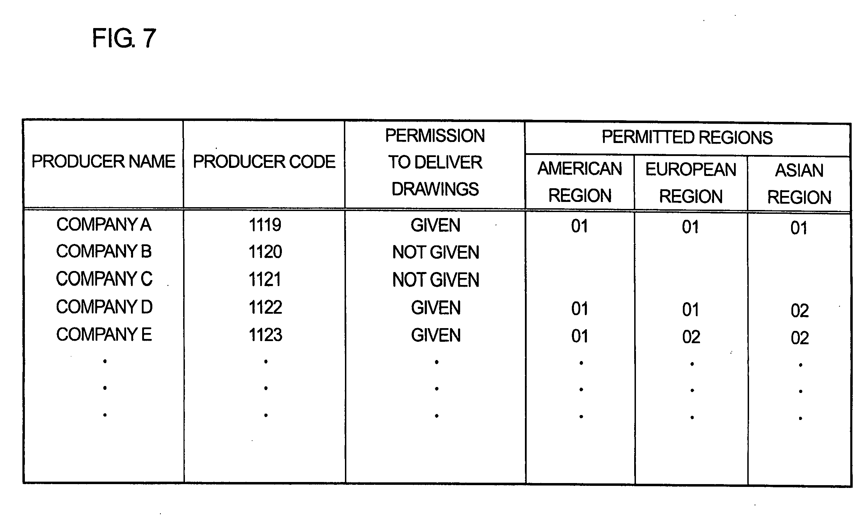

Fig. 7 shows the condition table organized by producer 39 in this implementation. The condition table organized by producer 39 includes each of items such as "trading partner producer name", "producer code", "permission to deliver drawings" and "permitted area".

Producer codes are assigned to trading partner producers in such a way that they can be uniquely identified. The producer code matching that extracted from the part number is retrieved from the condition table organized by producer 39 so that conditions for delivering drawings (security level) for each producer can be determined.

The item "permission to deliver drawings" in the condition table organized by producer 39, shows whether or not delivering drawings is permitted in any area outside the country. The item "permitted area" shows values of security levels in respective corresponding areas.

In this implementation, areas outside the country are classified under 3 groups (the American region, the European region and the Asian region). Each group of the item "permitted area" stores values of security levels according to agreements with respective trading partner producers. These regional groups can be increased if necessary.

In step 217, it is determined whether or not delivering drawings is permitted in any area outside the country, with reference to the item "permission to deliver drawings" for the producer code extracted from the part number. If a permission to deliver drawings is given for the producer code, the process proceeds to step 219.

In step 219, a security level corresponding to the region corresponding to the site having requested the drawing is obtained from the condition table organized by producer 39. For example, when the site having requested the drawings is in the Asian region, a value of security level is obtained from the item in the Asian region for the corresponding producer code.

In step 221, it is determined whether the obtained security level is "01" or not. In other words, it is determined whether the drawing corresponding to the part number input for the request can be printed or not in the region of the site having requested the drawing. When the obtained security level is "01", the value is set as the security level for the drawings.

When it is determined in step 217 that permission to deliver drawings is not given for the producer code or when it is determined in step 221 that the obtained security level is not "01", the process proceeds to step 223.

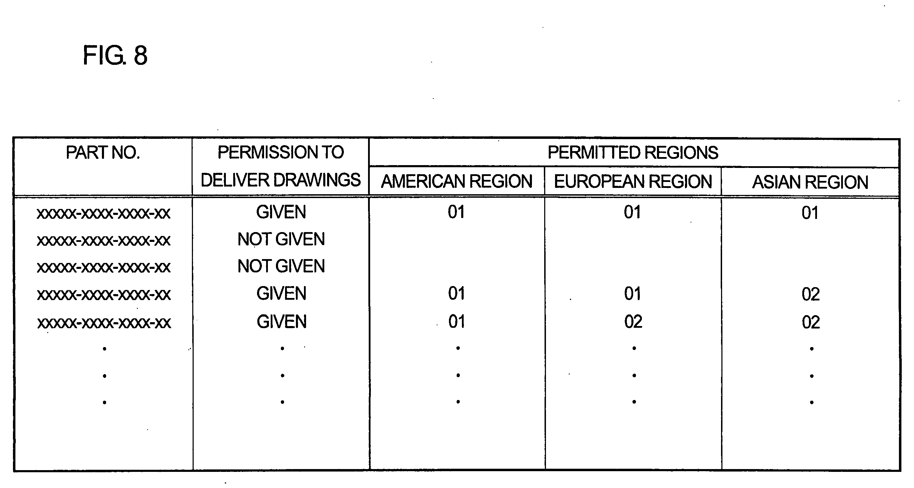

In step 223, it is determined whether permission to deliver drawings is given for drawings corresponding to the part number with reference to the condition table organized by part number 45. As shown in Fig. 8, the condition table organized by part number 45 has a data structure similar to the condition table organized by producer 39 mentioned above.

Accordingly it is determined whether or not delivering drawings is permitted in any area outside the country, with reference to the item "permission to deliver drawings" in the condition table organized by part number 45. If permission to deliver drawings is given, the process proceeds to step 225, where a value of security level for the region of the site having requested the drawing. The obtained security level is set as that of the site having requested the drawing.

When it is determined in step 223 that permission to deliver drawings is not given for the part number, the process proceeds to step 227, where a value of security level is set to "02" to prohibit printing of drawings.

One of the functions of the drawing data management system according to the present invention, is "reserved delivery of drawings". The reserved delivery of drawings is a function by which a user enters a reservation of printing a plurality of drawings into the drawing data management server 15and a printer connected to the drawing data management server 15 or the user terminal 27 prints the reserved plurality of drawings at a time.

For example, the reserved delivery of drawings is used when the user must submit a great number of part drawings by one operation to a trading partner producer. The user has the user terminal 27 connected to the drawing data management server 15 and sends a list of part numbers corresponding to the required drawings through the user terminal 27 connected to the drawing data management server 15. The drawing data management server 15 prints a plurality of drawings at a time based on the list of the specified part number.

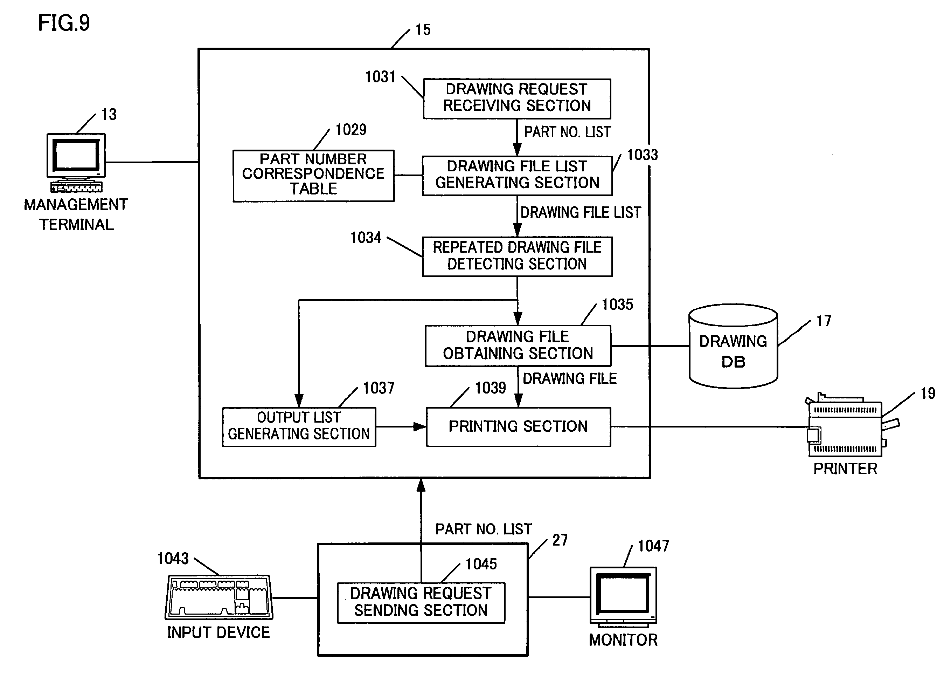

Fig. 9 shows a functional block diagram of the drawing data management server 15 and the terminal, provided with a function of reserved delivery of drawings. With reference to this drawing, a function of reserved delivery of drawings processed by the drawing data management system according to the present invention, will be described below. In the following description, it is assumed that connection between the user terminal 27 and the drawing data management server 15 is established and the reserved drawings are printed at a time by the printer 19 connected to the drawing data management server 15.

For example, the user terminal 27 is provided with an input device 1043, such as a keyboard and a mouse and an output device such as a monitor 1047. In one embodiment, the user terminal 27 may be a personal computer. The user who wishes a plurality of drawings to be printed at a time, reserves the delivery of the drawings through a part number input screen, displayed on the monitor 1047 of the user terminal 27.

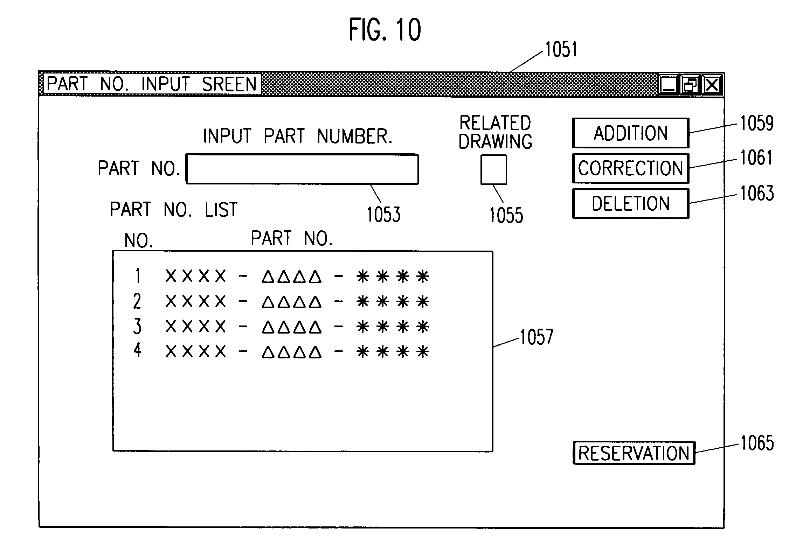

Fig. 10 shows an implementation of a part number input screen 1051. Through the part number input screen 1051, a part number list consisting of one or a plurality of part numbers can be generated and sent to the drawing data management server 15. In order to generate the part number list, the part number input screen 1051 is provided with a part number input form 1053, a related drawing input form 1055, a part number list window 1057, an addition button 1059, a correction button 1061, a deletion button 1063 and a reservation button 1065.

When generating a part number list, the user inputs a desired part number in the part number form 1053 and clicks the addition button 1059 to add the input number to the part number list. When the input number is added to the part number list, a serial number is assigned to the part number and the list is displayed on the part number list window 1057. When a plurality of drawings are delivered, a plurality of part numbers are added to the part number list.

The correction button 1061 on the part number input screen 1051 is used to correct any of the part numbers displayed in the input number list. The user can select any one of the part numbers and click the correction button 61 to correct the selected part number.

The deletion button 1063 on the part number input screen 1051 is used to delete any of the part numbers displayed in the input number list. The user can select any one of the part numbers and click the deletion button 63 to delete the selected part number from the list.

The related drawing input form 55 is used to define whether drawings related to the part number input in the part number input form 1053 should be printed or not. When the user wishes the related drawings to be delivered, the user inputs a value of "1" in the related drawing input form 55 to direct delivery of the related drawings. When the user does not need the related drawings, the related drawing input form 55 is left blank.

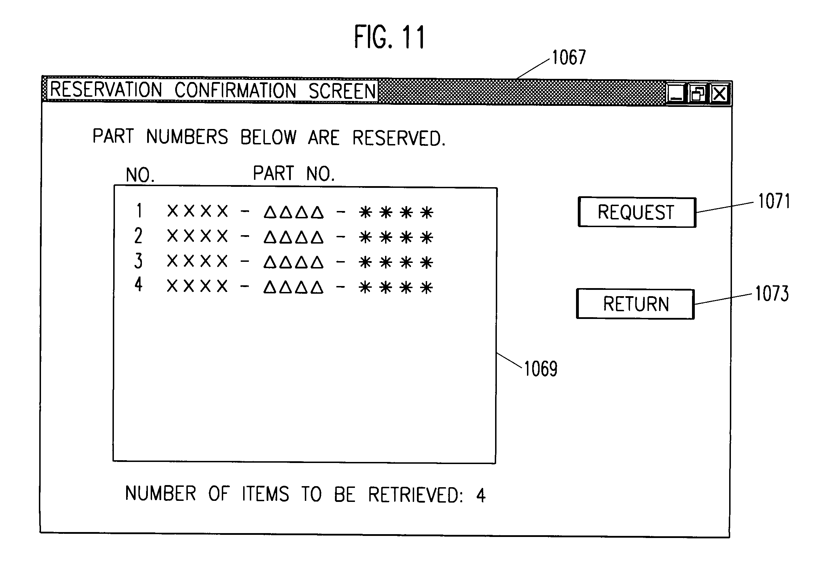

When the reservation button 1065 on the part number input screen 1051 is clicked, a reservation confirmation screen 1067 is displayed on the monitor 1047 of the user terminal 27. An implementation of the reservation confirmation screen 1067 is shown in Fig. 11. The reservation confirmation screen 1067 is provided with a part number list window 1069, a request button 1071 and a return button 1073.

In the part number list window 1069 of the reservation confirmation screen 1067, the final part number list of the part number input screen 1051 is displayed. The user finally confirms the part number list through the reservation confirmation screen 1067.

If there is nothing wrong with the part number list, the request button 1071 is clicked to send the part number list to the drawing data management server 15. If there is the need to correct the part number list again, the return button 1073 is clicked to return to the part number input screen 1051.

When the part number list is confirmed and the request button 1071 is clicked through the reservation confirmation screen 1067, a drawing request sending section 1045 in the user terminal 27 shown in Fig. 9 sends the part number list to the drawing data management server 15. The part number list sent by the drawing request sending section 1045 is received by a drawing request receiving section 1031 in the drawing data management server 15 and sent from the drawing request receiving section 1031 to a drawing file list generating section 1033.

The drawing file list generating section 1033 generates a drawing file list corresponding to the part number list with reference to a part number correspondence table 1029. The part number correspondence table 1029 relates part numbers to the drawing files stored in the drawing database 17 and stores the relationship.

The drawing file list generating section 1033 obtains the drawing file names corresponding to the part numbers in the part number list with reference to the part number correspondence table 1029 to generate a drawing file list. If the drawing files corresponding to the part numbers are not found on the part number correspondence table 1029, the drawing file list generating section 1033 records the fact in the drawing file list.

The generated drawing file list is sent to a repeated drawing file detecting section 1034. The repeated drawing file detecting section 1034 detects whether repetition of a plurality of drawing file names included in the drawing file list, exists or not. When repetitions of file names exist, repetition identifiers are assigned to the repeated drawing file names. With reference to the repetition identifiers, printing of repeated drawings is avoided when a plurality of drawings are printed.

The drawing file list is sent to a drawing file obtaining section 1035, after repetition identifiers are assigned by the repeated drawing file detecting section 1034. The drawing file obtaining section 1035 obtains the drawing files included in the drawing file list from the drawing database 17 and send them sequentially to a printing section 1039. The printing section 1039 prints the drawings through the printer 19 in the sequence of receiving them from the drawing file obtaining section 1035. During the process, printing of the drawings with repetition identifiers is avoided.

The drawing file list with repetition identifiers is also sent to an output list generating section 1037. The output list generating section 1037 generates "specification of reserved delivery of drawings" and sends it to the printing section 1039. The specification of reserved delivery of drawings is printed on completion of printing of the drawings reserved by the user. It describes the specifications of the current reserved delivery of drawings.

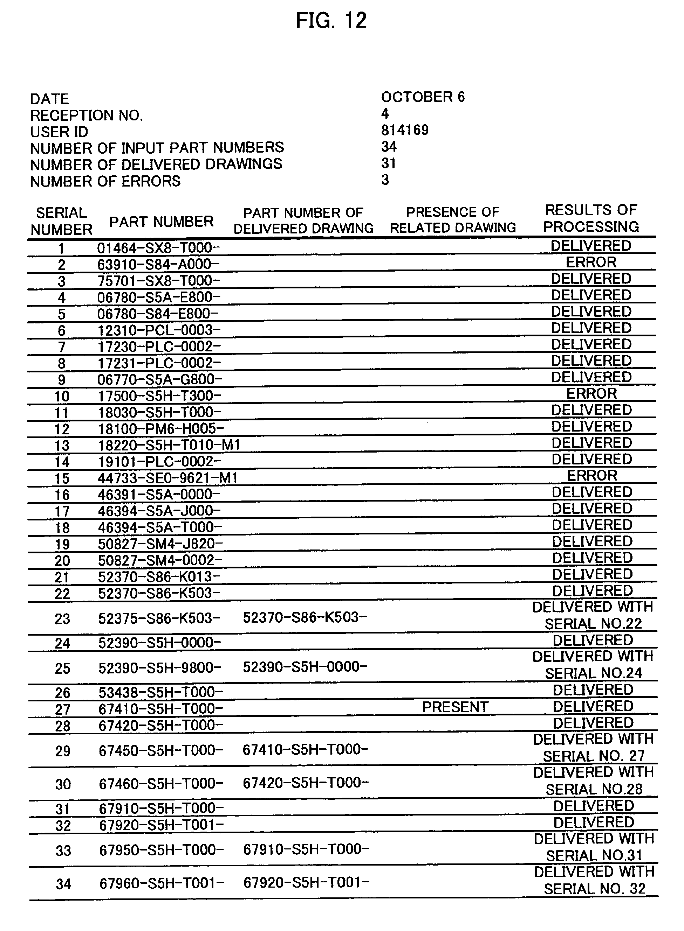

Fig. 12 shows an example of the specification of reserved delivery of drawings. The specification of reserved delivery of drawings includes date of delivery, reception number, ID of the requesting user, number of input part numbers (number of part numbers for which the user has requested delivery of drawings), number of delivered drawings (number of drawings actually delivered) and number of errors (number of drawings that have not been delivered for some reasons) with a list of results of processing for respective part numbers.

In the list of the specification of reserved delivery of drawings, serial numbers are assigned to part numbers. An item for results of processing indicates whether or not the drawing corresponding to the part number has been successfully delivered. If the drawing corresponding to the part number is not printed for some reasons, "error" is indicated in the item for results of processing. Further, for a repeated drawing, the serial number of the part number of the identical drawing is indicated in the item for results of processing, indicating that no repeated drawing has been output. At this time, item of part number of delivered drawing indicates the part number of the identical drawing. Item for presence of related drawings indicates that the drawing corresponding to the part number has related drawings.

The printing section 1039 prints the specification of reserved delivery of drawings, sent from the output list generating section 1037, after having printed all the drawing files. The specification of reserved delivery of drawings allows the user to confirm whether or not the requested drawings have been properly printed.

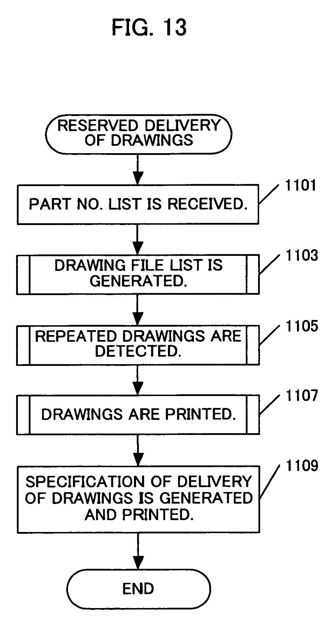

Figs. 13 to 16 are flowcharts showing processes of reserved delivery of drawings in the drawing data management server 15. Fig. 13 shows a flowchart of the whole process of reserved delivery of drawings.

First, in step 1101 the drawing data management server 15 receives the part number list from any of the user terminals 27. Then, in step 1103 the drawing data management server 15 generates a drawing file list based on the received part number list.

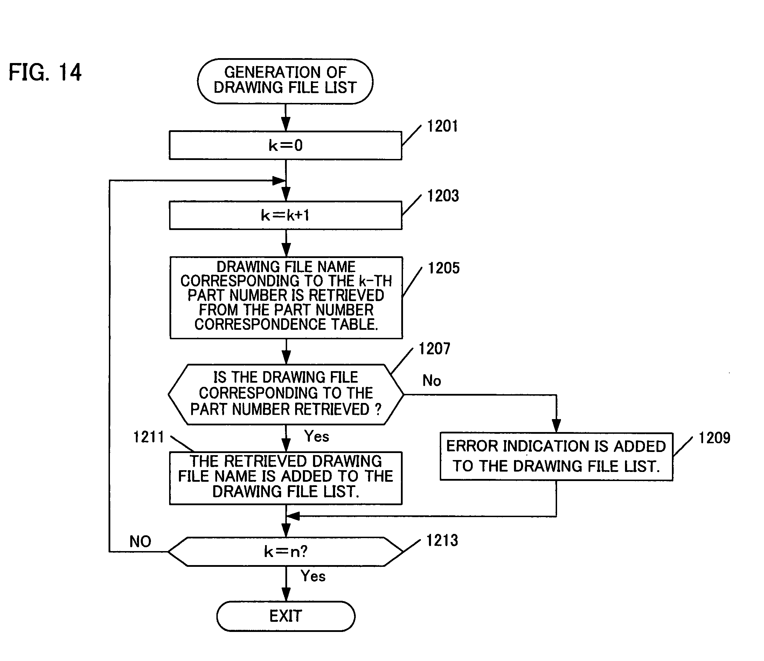

Fig. 14 shows a flowchart of a process of generating a drawing file list. In step 1201, number of repetition k of the flowchart is initialized to 0 and in step 1203 the value of k is increased by 1. In step 1205 the part number with the k-th serial number is obtained from the part number list, and the drawing file name corresponding to the part number is retrieved by consulting the part number correspondence table 1029.

As mentioned above, the part number correspondence table 1029 is a table in which the drawing file names stored in the drawing database 17 are related to part numbers. If the drawing file corresponding to an input part number is present in the drawing database 17, the corresponding drawing file name should be obtained from the part number correspondence table 1029. However, if the drawing file corresponding to the input part number is not present in the drawing database 17 for some reasons (for example, in case that a wrong part number is input), a drawing file name cannot be obtained.

Accordingly, in step 1207 it is determined whether the drawing file name corresponding to the part number is found in the part number correspondence table 1029. If the drawing file name is found, the retrieved file name is added to the drawing file list in step 1211. If the drawing file name is not retrieved, indication of error is retuned for the part number and recorded in the drawing file list in step 1209.

In step 1213 it is determined whether or not the number of repetitions k reaches the total number n of part numbers. The total number of part numbers is that of the part numbers included in the part number list. If k does not reach n in step 1213, drawing file names have not been obtained for all the part numbers included in the part number list. Accordingly, the process returns to step 1203 and the series of steps are repeated. If k reaches n in step 1213 as a result of repetition of loops, drawing file names have been obtained for all the part numbers included in the part number list.

In the part number correspondence table 1029, as mentioned above, one drawing file name is stored in correspondence with a plurality of part numbers. Accordingly, in some cases some drawing file names in the generated drawing file list are repeated. The repetition of drawing file names in the drawing file list is detected in step 1105 in the flowchart shown in Fig. 13.

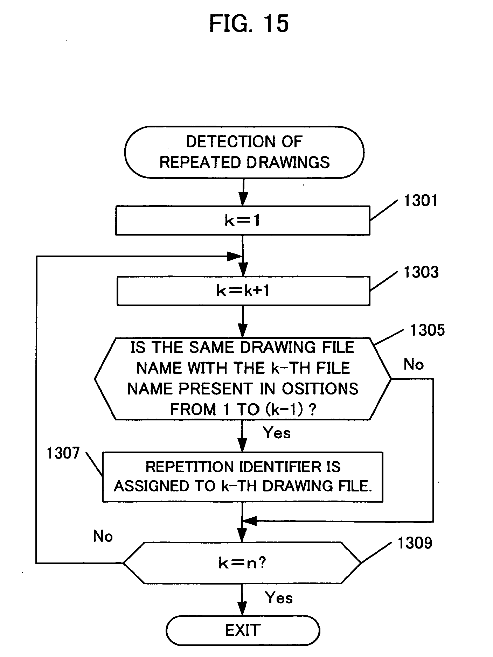

Fig. 15 is a flowchart showing in detail the process in step 1105. In step 1301 number of repetitions k of the flowchart is initialized to 1 and in step 1303 the number is increased by 1. In step 1305 it is determined whether or not the same drawing file name with the k-th file name is present in front of the position of the k-th file name. For example, in the case of k=10, it is determined whether or not the file name matching the 10th file name in the drawing file list is present in 1st to 9th file names in the drawing file list.

If the file name matching the k-th drawing file name is detected in step 1305, a repetition identifier is assigned to the k-th drawing file in step 1307. The repetition identifier indicates that different part numbers in the part number list are related to the same drawing file (the same image or drawing).

For example, the 10th file name is identical to the 3rd file name in the drawing file list, a repetition identifier with a value of 3 is assigned to the 10th drawing file name and stored in the drawing file list.

In step 1309 it is determined whether or not the number of repetitions k reaches the total number n of drawing file names. The total number of drawing file names is that of the drawing file names included in the part number list and identical to the total number of the part numbers included in the part number list.

If k does not reach n in step 1309, repetition has not been detected for all the drawing file names included in the part number list. Accordingly, the process returns to step 1303 and the series of steps are repeated. If k reaches n in step 1309, repetition has been detected for all the drawing file names included in the part number list.

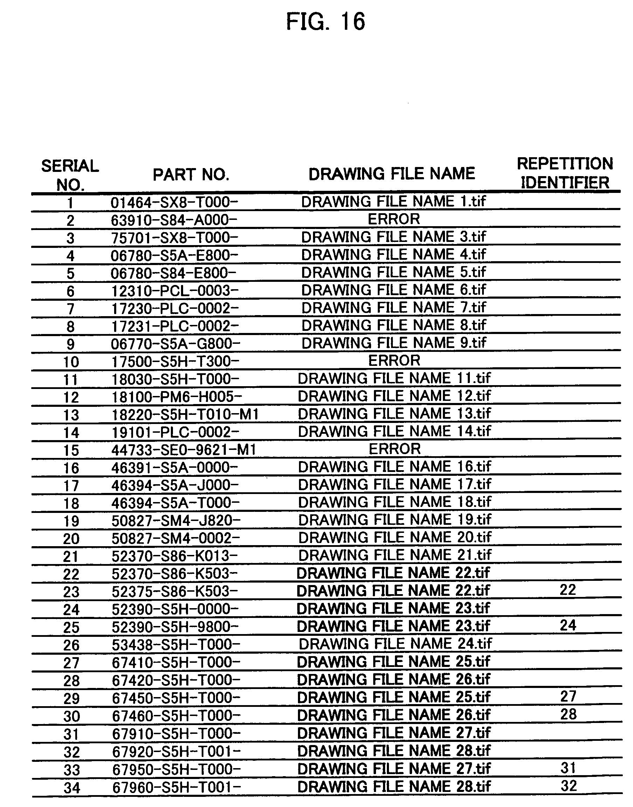

Fig. 16 shows an example of the drawing file list finally obtained. In this example the drawing file name of serial number 23 matches that of serial number 22 and therefore a value of 22 is put in the item of repetition identifier of serial number 23. Thus, in case that repetition of file name is present, the identical file name can be determined with reference to a value of the repetition identifier assigned to the drawing file name.

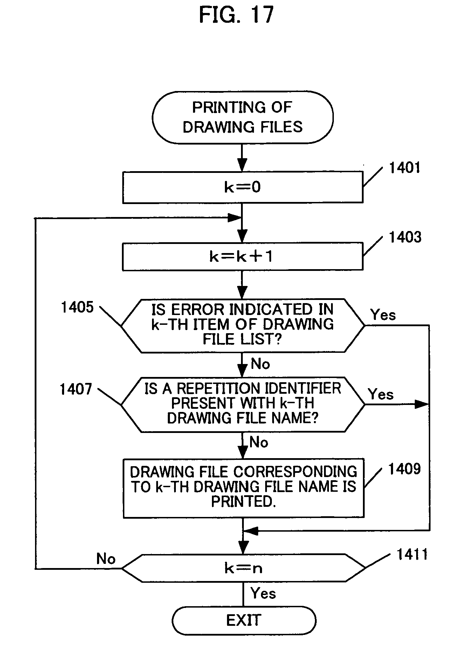

In step 1107 of Fig. 13 printing of drawings is performed based on the generated drawing file list. Fig. 17 is a flowchart showing in detail the process of printing drawings.

In step 1401 of Fig. 17 number of repetitions k of the flowchart is initialized to 0 and in step 1403 the number is increased by 1. In step 1405 it is determined whether or not error is indicated in the k-th item of the drawing file list. If error is indicated in the k-th item of the drawing file list, the drawing file is not present. Accordingly, the process proceeds to step 1411. If error is not indicated in the k-th item of the drawing file list, the process proceeds to step 1407.

In step 1407 it is determined whether or not a repetition identifier is present with the k-th drawing file name. If it is determined in step 1407 that a repetition identifier is not present, the process proceeds with step 1409, where the drawing file corresponding to the k-th drawing file name is obtained from the drawing database 17 and the drawing is printed through the printer 19.

If it is determined in step 1407 that the repetition identifier is assigned to the k-th drawing file name, the drawing of the drawing file has already been printed. Accordingly, the process does not proceed to step 1409 and printing of the drawing is not performed.

In step 1411 it is determined whether or not number of repetitions k reaches the total number of the drawing file names. If k does not reach n in step 1411, the process of printing has not been performed for all the drawing file names included in the drawing file list. Accordingly, the process returns to step 1403 and the series of steps are repeated. If k reaches n in step 1411, the process of printing has been completed for all the drawing file names included in the drawing file list.

On completion of the process of printing drawings, in step 1109 of Fig. 13 the specification of reserved delivery of drawings is generated based on the generated drawing file list and the specification is printed through the printer 1019. The printed specification of reserved delivery of drawings allows the user to confirm whether or not the requested drawings have been properly printed.

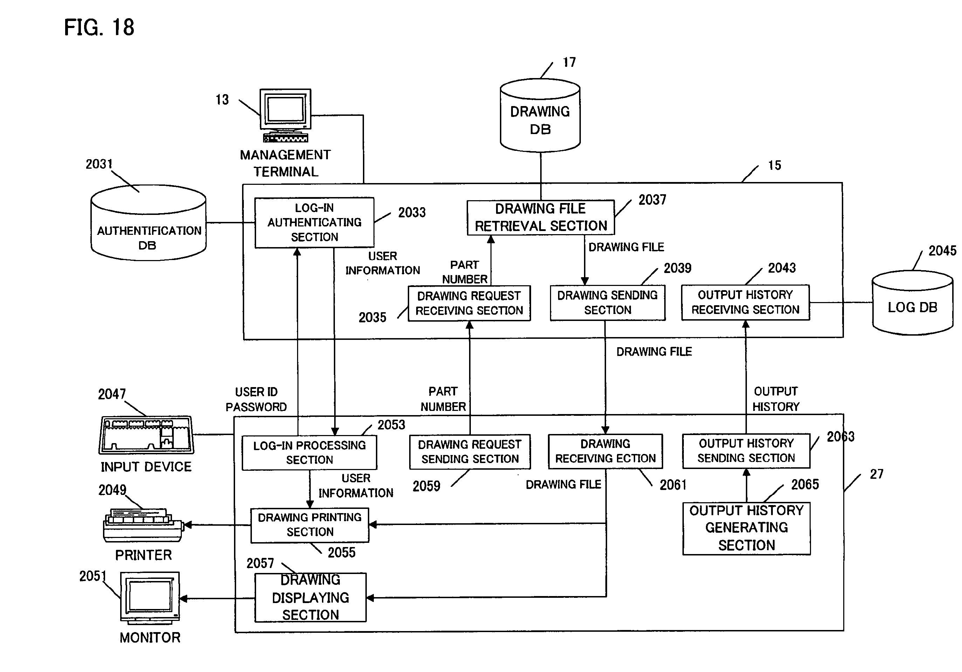

Fig. 18 is a block diagram showing in detail the drawing data management server 15 and the user terminal 27 in Fig. 1, according to another aspect of the present invention. The managing function of drawing delivery information in the drawing data management system according to the aspect of the present invention will be described below with reference to Fig. 18.

As mentioned above, users specially authorized by the company alone have access to the drawing data management server 15. For such specially authorized users, user registration has previously been performed.

Users for whom user registration has been performed, have a user ID and a password for uniquely identifying each of them. The user ID and password are stored in an authentication database 2031 in the drawing data management server 15.

Further, in the authentication database 2031, attribute information on each of the registered users is stored in association with each user ID. For example, attribute information of users includes "user name", "company name or business sector name", "department to which user belongs" and the like. Accordingly, when a user ID is specified, attribute information on the user corresponding to the user ID can be obtained through consulting the authentication database 2031.

User terminals 27 placed at respective sites are provided with input devices 2047 such as a keyboard and a mouse, for example. Further, the user terminals 27 are provided with output devices such as a printer 2049 and a monitor 2051. In one embodiment, the user terminals 27 may be typical personal computers.

When the user wishes to have part drawings stored in the drawing database 17, to be printed at user terminal 27, the user must log in to the drawing data management server 15 from user terminal 27. A log-in processing section 2053 shown in Fig. 18 performs the logging-in process on the user side, while a log-in authenticating section 2033 and the authentication database 2031 performs it on the side of the drawing data management server 15. The log-in processing section 2053 and log-in authenticating section 2033 function in association with each other to establish an access of the user to the drawing files.

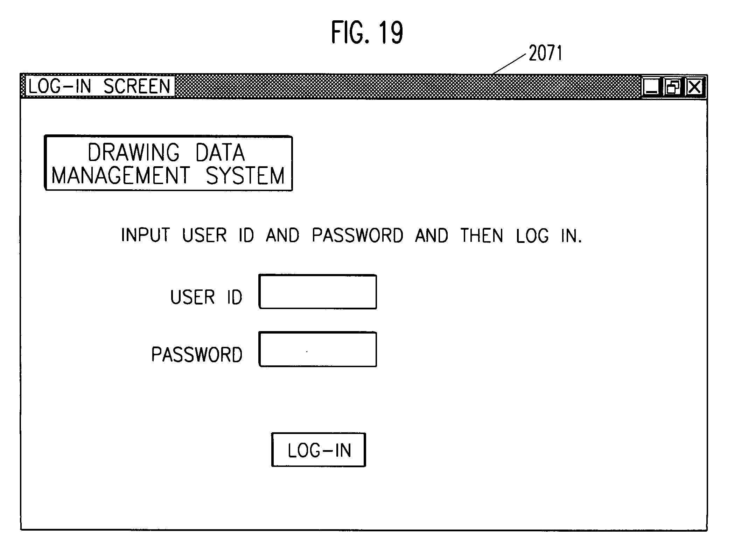

Fig. 19 shows a log-in screen 2071 of the drawing data management system, displayed at user terminals 27. At first, a user inputs his or her ID and password in an input form of the log-in screen and clicks a log-in button to send the input information to the drawing data management server 15.

The drawing data management server 15 compares the user ID and password sent from the user with contents of the authentication database 2031 to authenticate the user making access from a user terminal 27. As a result, if the user is authenticated, the drawing data management server 15 establishes connection with the user terminal from which the user ID has been sent and maintains the connection until the user logs out.

Further, after having authenticated the user ID, the drawing data management server 15 obtains attribute information on the user ID from the authentication database 2031 and sends the information to the user terminal 27. The user terminal 27 receives the attribute information sent from the drawing data management server 15 and temporarily stores it in the log-in processing section 2053. The log-in processing section 2053 stores the attribute information of the user until the user terminal 27 is disconnected from the drawing data management server 15 (that is, until the user logs off).

When connection between the drawing data management server 15 and the user terminal 27 is established, the user terminal 27 displays an input screen for part numbers. When the user wishes to output (display or print) drawings, he or she inputs the part number of the part for which he or she wishes to output drawings to send it to the drawing data management server 15.

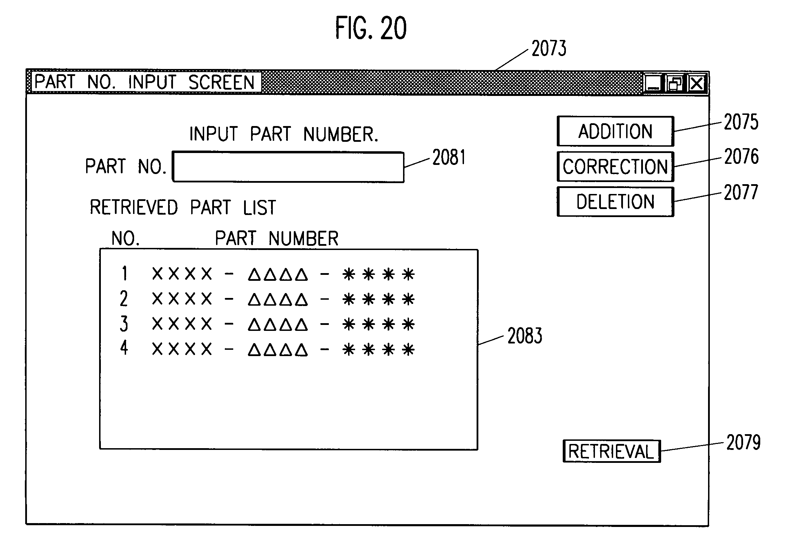

Fig. 20 shows an implementation of an input screen 2073 for part numbers. The input screen 2073 for part numbers is provided with a part number input format 2081. The user inputs the desired part number in the part number input format 2081. When the user inputs a part number and clicks an addition button 2075, the input information is added to a retrieved part list window 2083 of the input screen 2073.

In the retrieved part list window 2083 of the input screen 2073, part numbers thus input are displayed with serial numbers. If the user wishes to correct any of the part numbers in the list, he or she selects it and clicks a correction button 2076 to perform correction of the selected part number.

A deletion button 2077 on the input screen 2073 is used to delete any of the part numbers displayed in the retrieved part list window 2083. In the case of deleting a part number, a part number to be deleted is selected from the part numbers in the list and the deletion button is clicked to delete the selected part number from the retrieved part list.

The retrieved part number list displayed in the retrieved part list window 2083 on the input screen is sent to the drawing data management server 15 when the retrieval button 2079 is clicked. The sending of the part number(s) is processed by a drawing request sending section 2059 in the user terminal 27 shown in Fig. 18.

The one or more part numbers sent by the drawing request sending section 2059 are received by a drawing request receiving section 2035 in the drawing data management server 15. The received part number or numbers are sent to a drawing file retrieval section 2037 in order of the serial numbers assigned in the retrieved part list window 2083. The drawing file retrieval section 2037 retrieves the corresponding drawing file or files from the drawing database 17 using the part number or numbers as key.

After having retrieved the corresponding drawing file or files from the drawing database 17, the drawing file retrieval section 2037 sends the retrieved drawing file or files to a drawing sending section 2039. The drawing sending section 2039 receives the drawing file or files retrieved in order of the serial numbers from the drawing file retrieval section 2037 and sends the drawing file or files to the user terminal having sent the part number or numbers.

A drawing receiving section 2061 in the user terminal receives one or more drawing files sent from the drawing data management server 15 and temporarily stores the file or files. The file or files are stored in the drawing receiving section 2061until the user terminal 27 is disconnected from the drawing data management server 15.

When receiving the drawing file or files, the drawing receiving section 2061 not only temporarily stores the file or files, but also informs the user of the results of the retrieval through a screen of the monitor 2051.

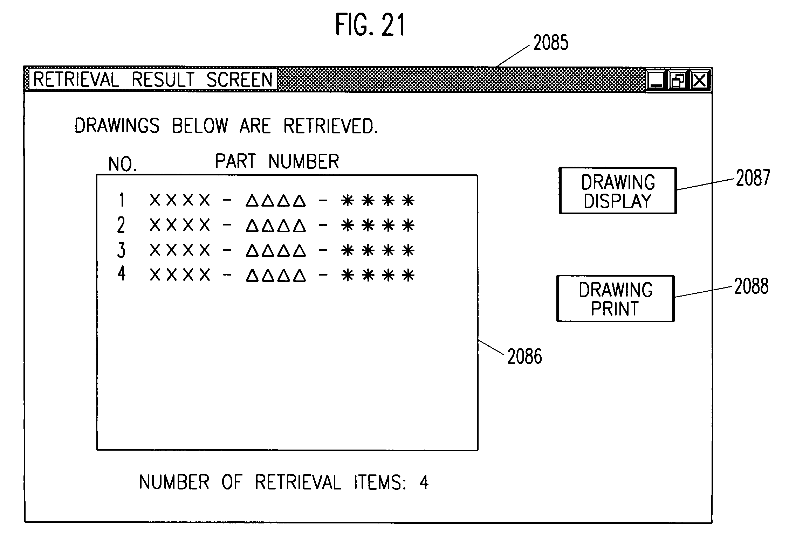

Fig. 21 shows an implementation of a retrieval result screen 2085 displayed on the monitor 2051. The retrieval result screen 2085 is provided with a retrieval result list window 2086, in which part number or numbers of the received drawing file or files. If a drawing file corresponding to the input part number is not found in searching the drawing database 17, the part number is not displayed in the retrieval result list 2086.

The user can select an output form of the drawing or drawings (that is, to display the drawing or drawings on the monitor 2051 or to print the drawing or drawings through the printer 2049) through the retrieval result screen 2085.

A drawing display button 2087 on the retrieval result screen 2085 is used to display the drawing or drawings corresponding to the part number or numbers displayed in the retrieval result list window 2086. When the user wishes to have the drawing or drawings to be displayed, he or she selects the part number or numbers in the list, for which a drawing or drawings are to be displayed, and clicks the drawing display button 2087. Then, the drawing or drawings corresponding to the part number or numbers are displayed on the monitor 2051.

When the part number or numbers are selected and the drawing display button 2087 is clicked, a drawing displaying section 2057 in the user terminal 27 shown in Fig. 18 obtains the drawing file or files corresponding to the selected part number or numbers from one or more files stored in the drawing receiving section 2061 to display the drawing or drawings contained in the drawing file or files on the monitor 2051

A drawing print button 2088 in the retrieval result screen 2085 is used to have the drawings corresponding to the part numbers displayed in the retrieval result list window 2086, printed by the printer 2049.

When the user wishes drawings to be printed, he or she selects the part numbers to be printed among the part numbers in the list and clicks the drawing print button 2088. Then, the drawings corresponding to the selected part numbers are printed by the printer 2049.

When a part number in the list is selected and the drawing print button 2088 is clicked, a drawing printing section 2055 in the user terminal 27 shown in Fig. 18 obtains the drawing file corresponding to the selected part number from one or more drawing files stored in the drawing receiving section and prints the drawing contained in the drawing file by the printer 2049. Further, when printing a drawing the drawing printing section 2055 obtains user attribute information stored in the log-in processing section 2053 and prints the attribute information on each of the sheets on which the drawing is printed.

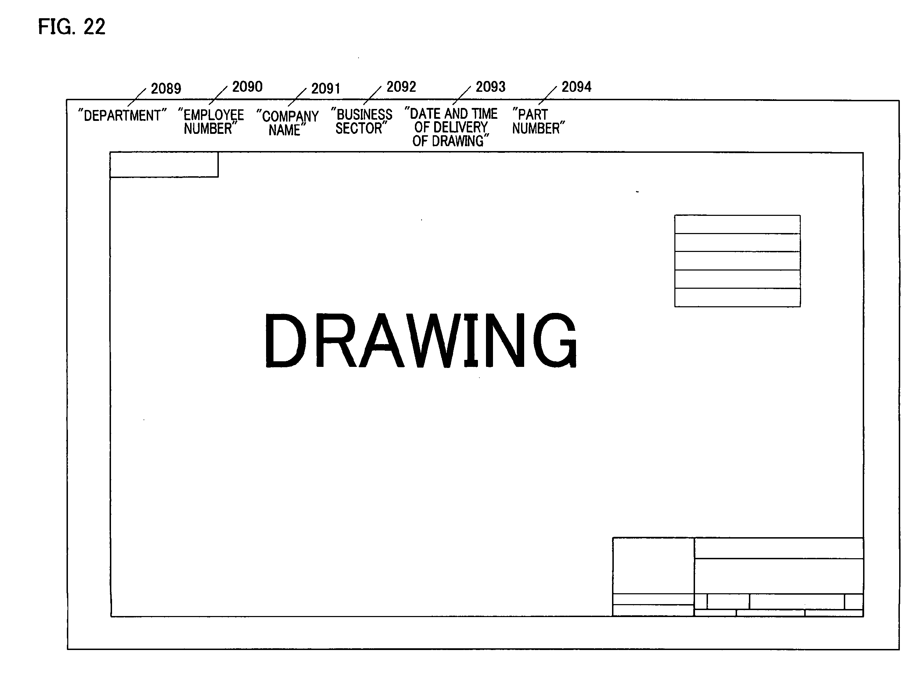

Fig. 22 shows an example of a drawing printed by the drawing data management system according to the present invention. In the drawing data management system, drawings contained in drawing files are printed in a similar way with typical printed drawings and user attribute information is simultaneously printed in the margins of the sheets. In Fig. 22, user attribute information such as department 2089, employee number 2090, company name 2091 and business sector 2092, as well as information such as date and time of delivery of drawing 2093 and part number 2094 are printed with the drawing.

As mentioned above, user attribute information is sent from the user drawing data management server 2015 when the user ID is authenticated. Accordingly, the attribute information can be printed for each user independently of user terminals 27, to clarify who is responsible for the printed drawing.

In another embodiment, "page number for split drawing" is printed with each piece of information printed with drawings as mentioned above. Page number for split drawing is a page number of the plurality of pages (sheets) with which one drawing is printed. For example, when a drawing is scaled to A1 size sheet, the drawing is to be split for printing on a plurality of sheets, because typical printers are not available for A1 size sheets. In this case, the drawing data management system according to the present invention prints "page number for split drawing" with each piece of information mentioned above, on each sheet. The user can easily find the one whole drawing consisting of the plurality of sheets, by checking page number for split drawing.

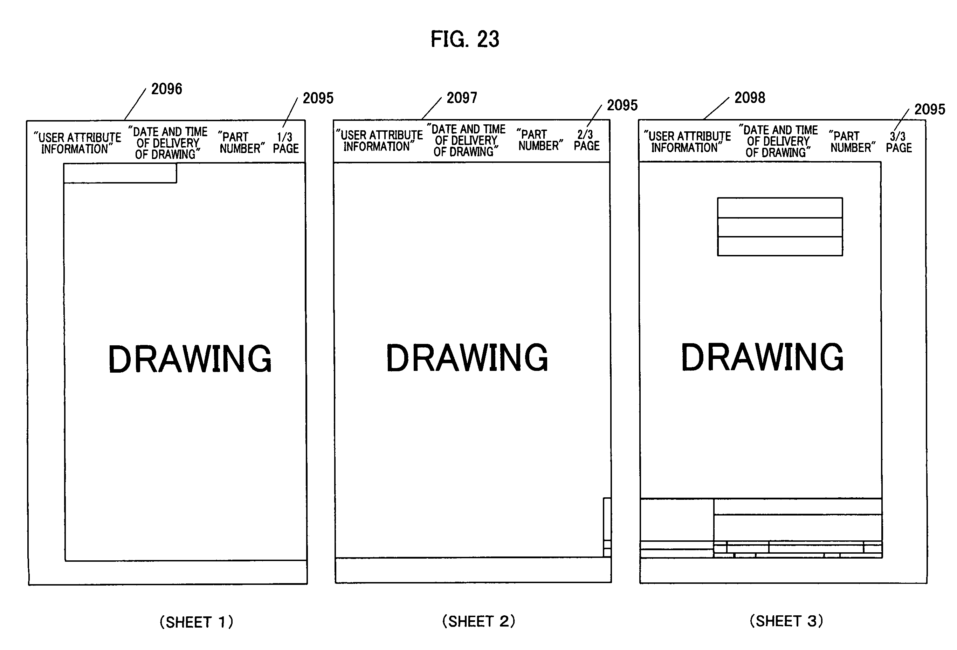

Fig. 23 shows an example of a drawing printed on three split sheets. In Fig. 23, one drawing is printed over three sheets. In this case the drawing data management system prints user attribute information (such as department, employee number, company name and business sector), date and time of delivery of drawing and part number in the upper part of each of the three sheets. The printed pieces of information are identical for the three sheets. Further, the drawing data management system prints page number for split drawing 2095 on each sheet so that the user easily check one drawing consisting of three sheets.

An output history generating section 2065 successively records the output process performed during a period from log-in to log-out of the user terminal 27 to the drawing data management server 15. For example, when printing process is performed for a drawing file obtained from the drawing data management server 15, the output history generating section 2065 records information such as time of printing, printed drawing file name and part number and number of printed sheets. Indications of drawing files are similarly recorded for the output history.

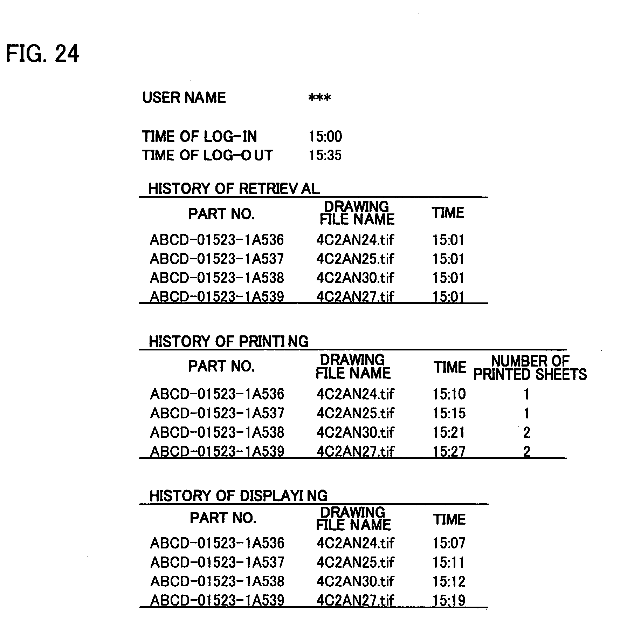

Fig. 24 shows an example of an output history generated by the output history generating section 2065. The output history includes "user name", "time of log-in", "time of log-out" or the like as well as "history of printing" and "history of displaying". User name indicates the name of the user accessing the drawing database 17 using the user terminal 27. Time of log-in indicates the time that the user logs in to the data management server 15, while time of log-out indicates the time that the user logs-out from the data management server 15. Time of log-out is blank after the user has logged in and is recorded when the user logs out.

In history of printing, drawing file name, time of printing, number of printed sheets and the like are recorded with the part number of the printed drawing.

As mentioned above, the drawing file retrieved from the drawing database 17, is printed as drawings after an output form is selected through the retrieval result screen 2085 of Fig. 21. Thus, the output history generating section 2065 updates output history when a part number is selected among the part numbers in the list and the drawing display button 2087 or the drawing print button 2088 is clicked.

In this example, besides history of printing and history of displaying, history of retrieval of drawings the user has retrieved is generated. In the history of retrieval, a drawing file name retrieved through the part number input screen 2073, time of retrieval and the like are recorded.

The output history generating section 2065 continues to record output history until the user terminal 27 logs out. An output history generating sending 2063 sends the output history to the drawing data management server 15 when the user terminal 27 logs out from the drawing data management server 15. An output history receiving section 2043 of the drawing data management server 15 receives the output history and stores it in a log database 2045, in association with the user who logged in. In one embodiment, data format of the output history to be stored in the log database is converted into that allowing more efficient retrieval and then stored there.

The drawing data management department managing the drawing data management server 15 is able to track name of user, time of printing and number of printed drawings through checking the log (output log) for each user stored in the log database.

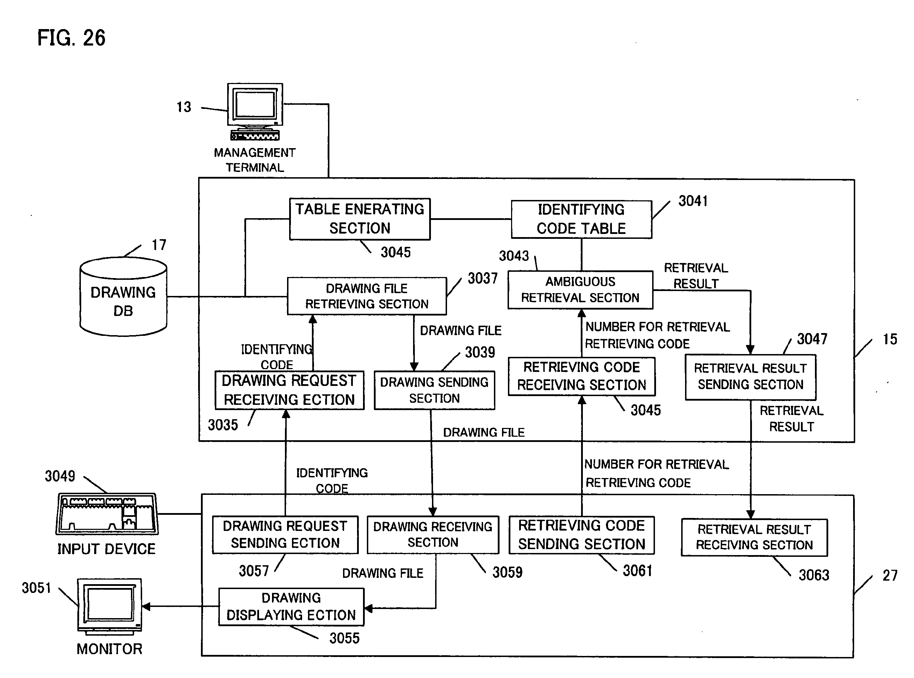

Fig. 26 is a detailed functional block diagram of the drawing data management server 15 and the user terminal 27, provided with ambiguous retrieval function according to another aspect of the present invention. For the description below, assume that connection between the user terminal 27 and the drawing data management server 15 has been already established.

User terminals 27 placed at respective sites are provided with input devices 49 such as a keyboard and a mouse. In one embodiment, the user terminals 27 may be typical personal computers.

When a user wish to have a drawing output (displayed or printed), the user exactly inputs the identifying code of the part drawing that he or she wishes to have output to send it to the drawing data management server 15. The sending of the identifying code is processed by a drawing request sending section 3057 of the user terminal shown in Fig. 26.

The identifying code sent by the drawing request sending section 3057 is received by a drawing request receiving section 3035 of the drawing data management server 15 and then sent to a drawing file retrieval section 3037. The drawing file retrieval section 3037 retrieves from the database 17 the corresponding drawing file using the received identifying code as a key.

When the drawing file retrieval section 3037 retrieves the corresponding drawing file from the database 17, it sends the drawing file to a drawing sending section 3039. The drawing sending section3039 receives the drawing file from the drawing file retrieval section 3037 and sends it to the user terminal 27 having requested the drawing.

A drawing receiving section 3059 of the user terminal 27 receives the drawing file sent from the drawing data management server 15 and temporarily stores it. The drawing receiving section 3059 stores the drawing file until the user terminal 27 is disconnected from the drawing data management server 15.

When receiving the drawing file, the drawing receiving section 3059 not only temporarily stores the file, but also informs the user of the results of the retrieval through a drawing displaying section 3055 and a screen of the monitor 3051. If a drawing file corresponding to the input part number is not present in the drawing database 17, error is indicated through a screen of the monitor 3051. Accordingly, when the user wishes to have the drawing data management system output a desired drawing, he or she must previously know the exact identifying code corresponding to the drawing file.

The drawing data management system according to the aspect of the present invention is provided with retrieval means called "ambiguous retrieval" that the user uses to retrieve the identifying code when he or she does not know the exact identifying code consisting of 15 digits as mentioned above. Ambiguous retrieval is a function to present the user identifying codes recorded in the drawing database 17 when an ambiguous identifying code is input. The user can find the exact identifying code using the ambiguous retrieval function.

In the ambiguous retrieval according to this implementation, main number and category number alone are used among the four kinds of numbers (main number, category number, type number and supplementary number) constituting the identifying code. In other words, a part of the identifying code corresponding to the parent drawing alone is subjected to retrieval. However, in other embodiments, ambiguous retrieval may be carried out for identifying codes including type number and supplementary number and corresponding to child drawings.

In order to describe ambiguous retrieval more specifically, magnitude of an identifying code defined in this implementation, is first described. Magnitude of an identifying code is defined by magnitude of hexadecimal notation in the character code system known as EBICDIC code. In the ambiguous retrieval, identifying codes are converted into EBCIDIC code expressions and the identifying codes in the drawing database 17 are searched based on their magnitudes.

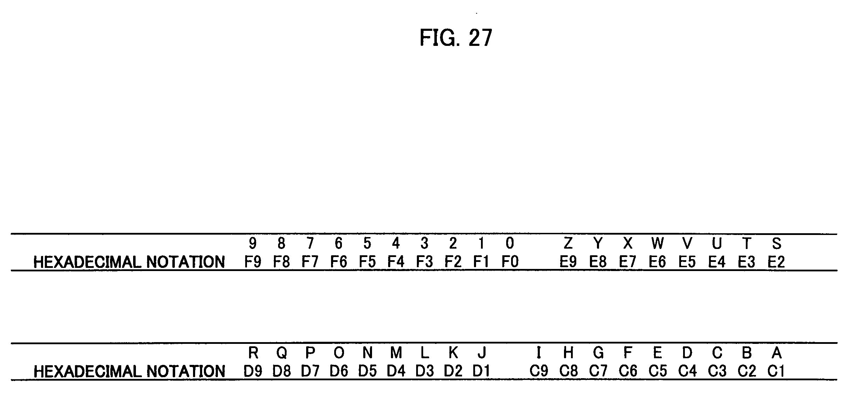

As mentioned above, one of numbers from 0 to 9 and characters A to Z is assigned to each digit of an identifying code as a value. Fig. 27 shows hexadecimal notation in EBICDIC code of numbers 0 to 9 and characters A to Z in a table.

Since magnitude of identifying code is defined based on magnitude of hexadecimal notation in EBICDIC code, magnitude of each number and each character is defined as in Table 2. That is, "9" is the largest, "Z" follows "0" in descending order and "A" is the smallest.

**TABLE 2**

| |
|---|
| 9>8>···>1>0>Z>Y>···>B>A |

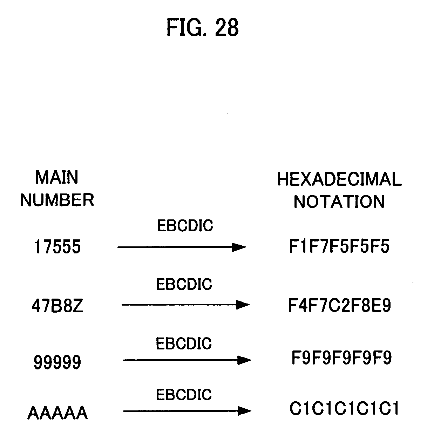

Fig. 28 shows an example in which five-digit main numbers are converted into expressions of hexadecimal notation of EBICIDIC code. As clearly shown in Fig. 28, for five-digit main numbers, the largest code is "99999", while the smallest code is "AAAAA". Similarly, magnitude of a category number consisting of three-digit code is defined.

Since in this implementation five-digit main numbers and three-digit category numbers alone are used, the number of digits of identifying code used for retrieval is eight. For magnitude of a code of a combination of a main number and a category number, the category number is defined as more significant than the main number. Thus, a eight-digit code can be defined, including the category number as higher three digits and the main number as lower five digits.

For example, assume a case in which a first identifying code in which main number is "17555" and category number is "999" is compared with a second identifying code in which main number is "17535" and category number is "998". In this case, the first identifying code is represented by "99917555" and the second identifying code is represented by "99817353". Accordingly, magnitude of the first identifying code and that of the second identifying code are represented as below.

"99917555" > "99817353"
This relationship is maintained when the codes are converted into hexadecimal notation according to EBICDIC code.

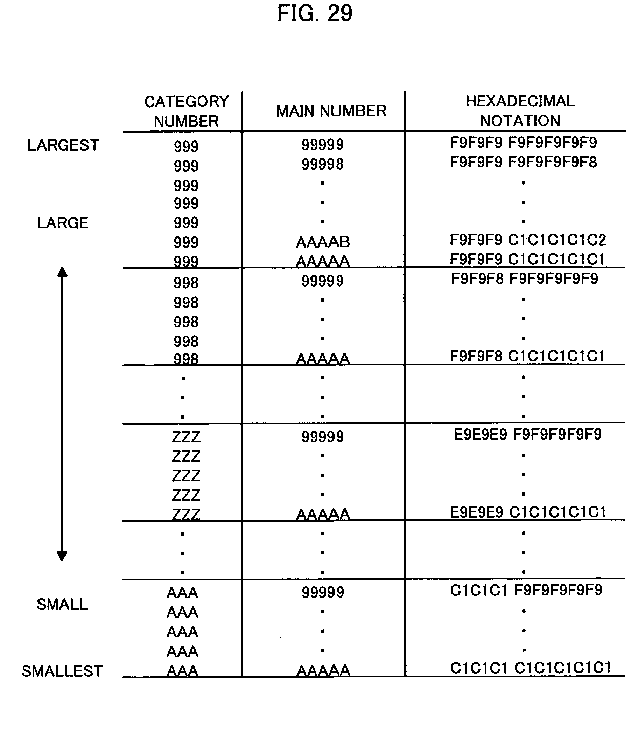

Fig. 29 shows a list of identifying codes arranged in descending order based on the above magnitude. As shown in Fig. 29, for codes consisting of main number and category number, the largest one is a combination of category number "999" and main number "99999", while the smallest one is that of category number "AAA" and main number "AAAAA".

Number of possible values assigned to each digit of an identifying code is 36. The values include those of 10 numbers and those of 26 characters of the alphabet. The number of digits of the identifying code is a total of eight digits consisting of three digits of category number and five digits of main number. Accordingly, a total number of possible combinations for identifying codes, is 36⁸.

As mentioned above, drawing files are not related to all the 36⁸ identifying codes. A very small number of the codes are actually used as identifying codes. Further, a way of assigning identifying codes to part drawings does not depend on the above magnitude. Thus, when identifying codes are arranged according to the above magnitude, the identifying codes actually registered are not serial but scattered.

An identifying code table 3041 shown in Fig. 26 is used to store non-serial identifying codes (that is, the identifying codes corresponding to the drawings stored in the drawing database 17) together.

In the identifying code table 3041, serial numbers are assigned to the registered identifying codes in descending order of magnitude of the codes. With reference to the identifying code table 3041, the registered identifying codes and the order ranks of magnitude can be checked.

The identifying code table 3041 is generated by sequentially adding identifying codes newly registered. When a new drawing file is registered in the drawing database 17, a table generating section 3045 in Fig. 26 adds an identifying code assigned to the new drawing file, to the identifying code table 3041. At that time, the table generating section 3045 updates all the serial numbers in the identifying code table 3041 and updates order of magnitude of respective identifying codes.

In the ambiguous retrieval, an ambiguous identifying code input by the user is compared with those stored in the identifying code table 3041, and any number of registered identifying codes are presented to the user, based on magnitude of the input identifying code. In the description, an ambiguous code input by the user for retrieval is referred to as retrieving code.

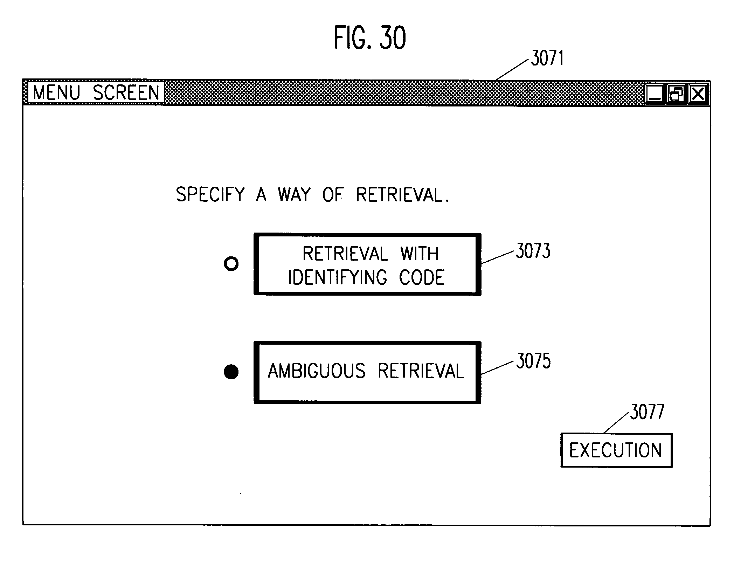

Next, the ambiguous retrieval in the drawing data management system is described according to the procedure performed by the user. Fig. 30 shows a menu screen 3071 displayed on the monitor 3051. Through this screen, the user selects a way of retrieval. A user who wishes to use the function of ambiguous retrieval, selects an ambiguous retrieval button 3075 on the menu screen 3071 and clicks an execution button 3077.

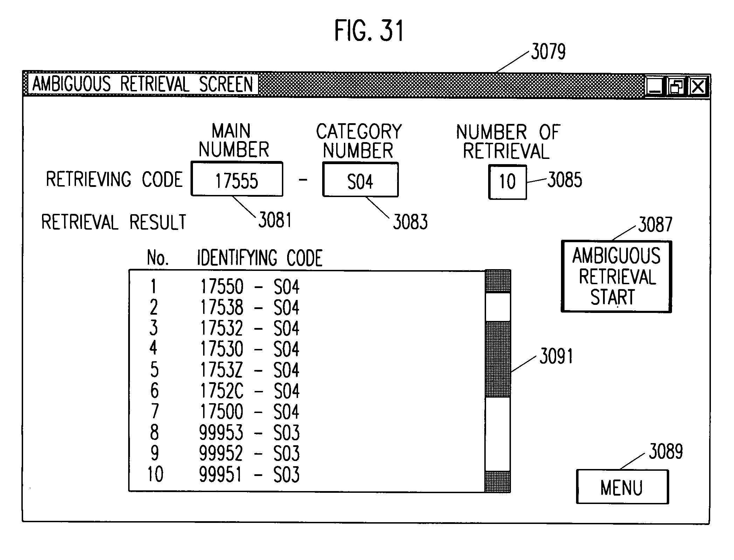

When the ambiguous retrieval is selected through the menu screen 3071, an ambiguous retrieval screen 3079 shown in Fig. 31 is displayed. The ambiguous retrieval screen 3079 is provided with a retrieving code input form 3081 and 3083, an input form for number for retrieval 3085, an ambiguous retrieval start button 3087, a menu button 3089 and a retrieval result window 3091.

The retrieving code input form is divided into a main number input form 3081 and a category number input form 3083. In the main number input form 3081, a main number of an identifying code is input, while in the category number input form 3083, a category number is input.

As mentioned above, a main number and a category number of an identifying code represent a code of the parent drawing. In the ambiguous retrieval according to this implementation, the specified number for retrieval of identifying codes registered in the drawing database 17 are obtained based on the input retrieving code (the main number and the category number).

The input form for number for retrieval 3085 is used to specify the number of identifying codes to be retrieved. For example, when the user inputs a value of "10" in the input form, 10 identifying codes present in the identifying code table 3041 are obtained.

The ambiguous retrieval start button 3087 is clicked to confirm the retrieving code input in the identifying code input form 3081 and 3083 and to start the retrieval. The retrieval result window 3091 displays in a list form identifying codes retrieved. The menu button 3089 is clicked to return from the ambiguous retrieval screen 3079 to the menu screen 3071.

The ambiguous retrieval is described below with a concrete example. In this concrete example, suppose that the user inputs "17555" in the main number input form 3081, "S04" in the category number input form 3083 and "10" in the input form for number for retrieval to perform ambiguous retrieval based on these inputs.

In this case, the user clicks the ambiguous retrieval start button 3087 to send the retrieving code and number for retrieval to the drawing data management server 15. A retrieving code sending section 3061 in the user terminal 27 shown in Fig. 26 processes the sending of the retrieving code and number for retrieval.

A retrieving code receiving section 3045 in the drawing data management server 15 shown in Fig. 26 receives the sent retrieving code and number for retrieval and sends them to an ambiguous retrieval section 3043. The ambiguous retrieval section 3043 consults the identifying code table 3041 storing the registered identifying codes and obtains the input number for retrieval of identifying codes from the table. The identifying codes thus obtained by the ambiguous retrieval section 3043 are selected from those smaller than the retrieving code in order of being close to the retrieving code.

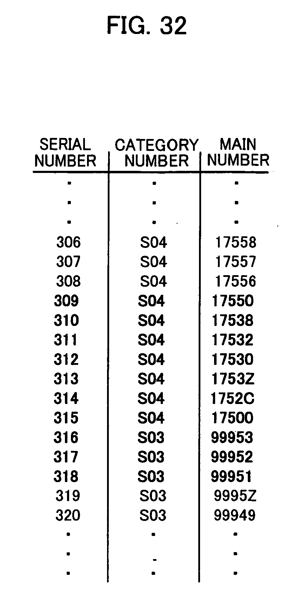

Fig. 32 shows an example of the identifying code table 3041. A part of the table around input "17555-S04" is shown as a concrete example. With reference to Fig. 32, the ambiguous retrieval section 3043 will be described below.

At first, "17555-S04" input by the user is compared with those stored in the identifying code table 3041 generated from the drawing database 17. As a result, it is determined that an identifying code matching "17555-S04" is not present in the identifying code table 3041 shown in Fig. 32. In other words, it is found that a parent drawing corresponding to "17555-S04" is not present in the drawing database.

When an identifying code matching the retrieving code is not present in the identifying code table 3041, the identifying code next smaller than "17555-S04" is retrieved from the identifying code table 3041. In the case of Fig. 32, the identifying code next smaller than "17555-S04" is "17550-S04". Accordingly, "17550-S04" is the first identifying code to be obtained. In other words, this identifying code is retrieved as the identifying code that is smaller than and next to "17555-S04".

In this concrete example, the number for retrieval specified by the user is "10". Accordingly, the identifying code next smaller than the retrieved one in the identifying code table 3041 is retrieved. In this case, the identifying code next smaller than "17550-S04" is "17538-S04", which is the second identifying code to be obtained.

In a similar way, a total of 10 identifying codes are sequentially obtained from the identifying code table 3041. In other words, the ambiguous retrieval section 3043 obtains the identifying codes with serial numbers from "309" to "318" in the identifying code table 3041. The 10 identifying codes thus obtained form the retrieval result of the ambiguous retrieval.

A retrieval result sending section 3047 in Fig. 26 sends the retrieval result of the ambiguous retrieval section 3043 to the user terminal 27 having started the retrieval. The sent retrieval result is received by a retrieval result receiving section 3063 in the user terminal 27 and displayed through the monitor 3051.

The retrieval result of the ambiguous retrieval is different from those obtained by conventional retrieval means based on matching of characters in codes. For example, conventional retrieval means using a wildcard retrieve codes with beginning matching, end matching, part matching or the like. However, such retrieval based on matching of characters can hardly retrieve identifying codes from "99953-S03" to "99951-S03", because characters in the codes vary widely.

In the ambiguous retrieval according to the present invention, magnitude of each identifying code is defined and the identifying code having the closest value to the target, based on the magnitude not on matching. Accordingly, even when characters (including numbers) in the codes vary widely from the registered codes, some of the registered codes can be presented to the user with reliability.

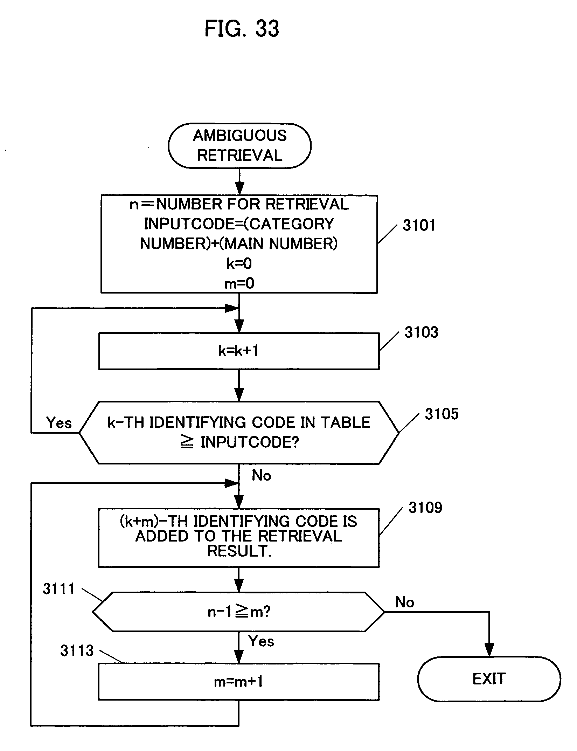

Fig. 33 shows an example of a flowchart of the ambiguous retrieval. At first, respective parameters are set in step 3101. N is the number for retrieval, specified by the user. INPUTCODE is the retrieving code input by the user. The upper 3 digits of the code form category number, while the lower 5 digits of the code form main number. (For example, the code is "S0417555" in the above concrete example. K represents a serial number showing magnitude of an identifying code in the identifying code table 3041. K is initialized to "0" in step 3101. M is a parameter used to obtain n identifying codes and is also initialized to "0".

In step 3103, 1 is added to serial number k and in step 3105, the identifying code corresponding to serial number k in the identifying code table 3041, is compared with INPUTCODE. If the k-th identifying code in the identifying code table 3041 is larger than INPUTCODE, the process returns to step 3103 and the series of steps are repeated. In other words, identifying codes in the identifying code table 3041 are compared with INPUTCODE one by one in descending order.

As an example, a case where the value of INPUTCODE is "S0417555" and the identifying code table 3041 of Fig. 32 is used, will be described. In this case, INPUTCODE is smaller than identifying codes in the identifying code table 3041 until k reaches 308 (identifying code "S0417556"). However, in the next step 3105, k reaches 308+1=309 and the corresponding identifying code is "S0417550". At this time, the k-th identifying code becomes smaller than INPUTCODE and therefore the process proceeds with step 3109.

In steps from 3109 to 3113, a certain number of identifying codes are obtained from the identifying code table 3041. The number is specified by the user for retrieval. In step 3109, (k+m)-th identifying code is added to the retrieval result. In step 3101, an initial value of m is set to "0" and in step 3113, 1 is added to the value of m. Accordingly, when steps 3109 to 3113 are repeated, identifying codes from the identifying code table 3041 are added to the retrieval result. In step 3111, (n-1) is compared with the value of m to thereby obtain the user-specified number of identifying codes.

Specific implementations of the present invention have been described above. The present invention, however, is not limited to such implementations, and the scope of the invention includes a wide range of variations easily performed by those skilled in the art.

## Claims

1. A drawing data management system comprising a drawing database storing drawing files and a drawing data management server connected to the drawing database, so that in response to input of an identifying code uniquely identifying drawing files, the drawing data management server retrieves from the drawing database a drawing file corresponding to the input identifying code,
wherein the drawing data management server defines magnitude of identifying codes assigned to the drawing files stored in the drawing database and has the identifying codes to be stored in an identifying code table and according to a user-input retrieving code, retrieves from the identifying code table the identifying code smaller than and closest to the retrieving code, based on the magnitude.

2. A drawing data management system according to claim 1, wherein the drawing data management server retrieves a plurality of identifying codes in descending order of the magnitude and the number of the retrieved identifying codes is defined by a number specified by the user.

3. A drawing data management system according to claim 1, wherein the identifying codes include main number, category number and type number, the main number and the category number representing the parent drawing, and the drawing data management server retrieves identifying codes using the main number and the category number.

4. A drawing data management system according to claim 1, wherein the identifying codes comprise a combination of 36-kind characters, 0 to 9 and A to Z, and magnitudes of the identifying code are defined by magnitudes of expressions of hexadecimal notation in EBICDIC code.

5. A method for management of drawings in a drawing data management system comprising a drawing database storing drawing files and a drawing data management server connected to the drawing database, so that in response to input of an identifying code uniquely identifying drawing files, the drawing data management server retrieves from the drawing database a drawing file corresponding to the input identifying code, the method comprising the following performed by the drawing data management server:
defining magnitude of identifying codes assigned to the drawing files stored in the drawing database and have the identifying codes to be stored in an identifying code table; and
according to a user-input retrieving code, retrieving from the identifying code table the identifying code smaller than and closest to the retrieving code, based on the magnitude.

6. A program for a drawing data management system comprising a drawing database storing drawing files and a drawing data management server connected to the drawing database, so that in response to input of an identifying code uniquely identifying drawing files, the drawing data management server retrieves from the drawing database a drawing file corresponding to the input identifying code, the program being adapted to have the drawing data management server perform the following:
defining magnitude of identifying codes assigned to the drawing files stored in the drawing database and have the identifying codes to be stored in an identifying code table; and
according to a user-input retrieving code, retrieving from the identifying code table the identifying code smaller than and closest to the retrieving code, based on the magnitude.
